# EUROPEAN PATENT APPLICATION

(11) **EP 3 343 343 A1**
(43) Date of publication of application: **04.07.2018**
(21) Application number: 18157547.3
(22) Date of filing: 30.01.2015
(51) Int. Cl.: G06F 3/0488, G06F 3/0484, H04N 5/232, G06F 3/0481

(54) **MOBILE TERMINAL AND CONTROL METHOD FOR THE MOBILE TERMINAL**

(30) Priority: 12.08.2014 KR 20140104487
(62) Divisional of application: 15000282.2
(71) Applicant: LG Electronics, Inc., Yeongdeungpo-gu 150-721 Seoul (KR)
(72) Inventor: LEE, Jiyoun, 137-893 Seoul (KR); JUNG, Juhyun, 137-893 Seoul (KR)
(74) Representative: Beyer, Andreas

(57) **Abstract**

A mobile terminal including a wireless communication unit configured to wirelessly communicate with at least one other terminal; a camera; a display unit configured to display a preview image received through the camera; and a controller configured to receive a touch applied to a first graphic object included in the preview image, adjust a focus around the first graphic object, display an indicator on the display unit indicating there is first information associated with the first graphic object, receive a preset type of touch applied to the indicator when the preview image is displayed, and display the first information associated with the first graphic object based on the preset type of touch.

## Description

### BACKGROUND OF THE INVENTION

### Field of the Invention

The present invention relates to a mobile terminal having an image capture function and a control method thereof.

### Description of the Related Art

Terminals may be divided into mobile/portable terminals and stationary terminals. Also, the mobile terminals may be classified into handheld terminals and vehicle mounted terminals. As it becomes multifunctional, a mobile terminal can capture still images or moving images, play music or video files, play games, receive broadcast and the like, so as to be implemented as an integrated multimedia player.

Various new attempts have been applied to implement a complicated function of the multimedia player in the aspect of hardware and software. For example, a user interface environment allows a user to search or select a function in an easy and convenient manner. In addition, in recent years, the resolution and function of a camera provided in the mobile terminal have been enhanced, thereby increasing the utilization of a camera provided in the mobile terminal.

### SUMMARY OF THE INVENTION

An aspect of the present invention is to provide a mobile terminal for providing an optimized GUI capable of providing information associated with a subject to the user, and a control method thereof.

Another aspect of the present invention is to provide a mobile terminal capable of performing various functions using information associated with a subject in a preview image, and a control method thereof.

To achieve these and other advantages and in accordance with the purpose of the present invention, as embodied and broadly described herein, the present invention provides in one aspect a mobile terminal including a wireless communication unit configured to wirelessly communicate with at least one other terminal; a camera; a display unit configured to display a preview image received through the camera; and a controller configured to receive a touch applied to a first graphic object included in the preview image, adjust a focus around the first graphic object, display an indicator on the display unit indicating there is first information associated with the first graphic object, receive a preset type of touch applied to the indicator when the preview image is displayed, and display the first information associated with the first graphic object based on the preset type of touch. The present invention also provides a corresponding method of controlling the mobile terminal.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1A is a block diagram illustrating a mobile terminal according to an embodiment of the present invention;
FIGS. 1B and 1C conceptual views in which an example of a mobile terminal according to an embodiment of the present invention is seen from different directions;
FIG. 2 is a flow chart illustrating a control method of the present invention;
FIG. 3A, 3B and 3C is a conceptual view illustrating a control method shown in FIG. 2;
FIGS. 4A, 4B, 4C, 5A, 5B, 6A and 6B are conceptual views illustrating a method for providing information associated with a graphic object to which a touch is applied or focus is adjusted in a preview image;
FIGS. 7A, 7B and 7C are conceptual views illustrating a method of providing information associated with any one of a plurality of categories when information associated with a graphic object to which a touch is applied or focus is adjusted in a preview image includes the plurality of categories;
FIGS. 8A and 8B are conceptual views illustrating a method of determining an application associated with a graphic object to which a touch is applied or focus is adjusted in a preview image, and providing information associated with the graphic object using the application;
FIGS. 9A, 9B and 9C are conceptual views illustrating a method of performing communication with a device when a subject corresponding to a graphic object to which a touch is applied or focus is adjusted in a preview image is the device capable of communication;
FIGS. 10A, 10B and 10C are conceptual views illustrating a method of using an image captured when information associated with a graphic object to which a touch is applied or focus is adjusted in a preview image is provided; and
FIGS. 11A, 11B, 11C and 11D are conceptual views illustrating a method of using information associated with a graphic object to which a touch is applied or focus is adjusted in a preview image.

### DETAILED DESCRIPTION OF THE INVENTION

Description will now be given in detail according to the embodiments disclosed herein, with reference to the accompanying drawings. For the sake of brief description with reference to the drawings, the same or equivalent components will be provided with the same reference numbers, and description thereof will not be repeated. A suffix "module" and "unit" used for constituent elements disclosed in the following description is merely intended for easy description of the specification, and the suffix itself does not give any special meaning or function.

The accompanying drawings are used to help easily understand the technical idea of the present invention and the idea of the present invention is not limited by the accompanying drawings. The idea of the present invention should be construed to extend to any alterations, equivalents and substitutes besides the accompanying drawings.

Mobile terminals described herein may include cellular phones, smart phones, laptop computers, digital broadcasting terminals, personal digital assistants (PDAs), portable multimedia players (PMPs), navigators, slate PCs, tablet PCs, ultra books, wearable devices (for example, smart watches, smart glasses, head mounted displays (HMDs)), and the like. However, the configuration according to the embodiments of this specification can also be applied to stationary terminals such as digital TV, desktop computers and the like, excluding a case of being applicable only to the mobile terminals.

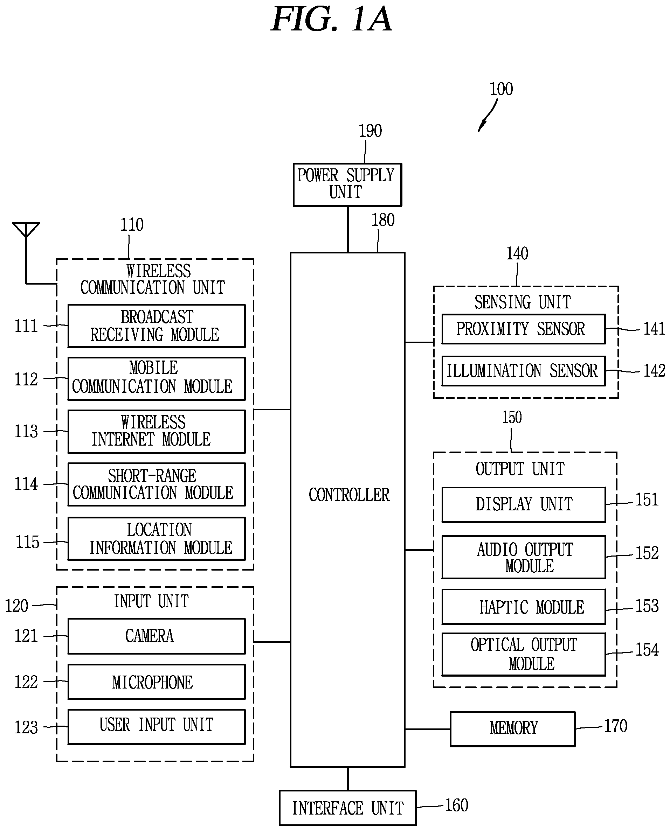

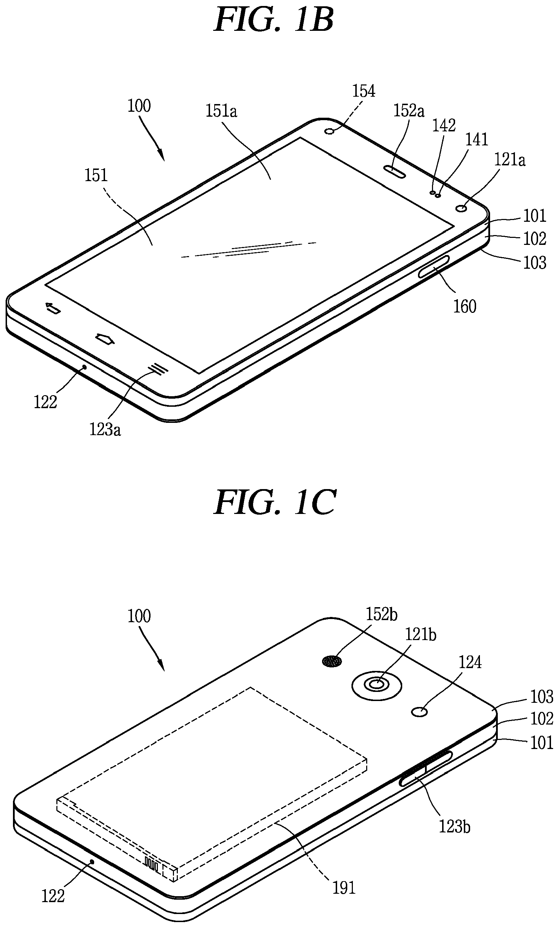

Referring to FIGS. 1A through 1C, FIG. 1A is a block diagram of a mobile terminal in accordance with the present invention, FIGS. 1B and 1C are conceptual views of one example of the mobile terminal, viewed from different directions. The mobile terminal 100 may include components, such as a wireless communication unit 110, an input unit 120, a sensing unit 140, an output unit 150, an interface unit 160, a memory 170, a controller 180, a power supply unit 190 and the like. FIG. 1A illustrates the mobile terminal having various components, but implementing all of the illustrated components is not a requirement. Greater or fewer components may alternatively be implemented.

In more detail, the wireless communication unit 110 of those components may typically include one or more modules which permit wireless communications between the mobile terminal 100 and a wireless communication system, between the mobile terminal 100 and another mobile terminal 100, or between the mobile terminal 100 and a network within which another mobile terminal 100 (or an external server) is located.

For example, the wireless communication unit 110 may include at least one of a broadcast receiving module 111, a mobile communication module 112, a wireless Internet module 113, a short-range communication module 114, a location information module 115 and the like. The input unit 120 may include a camera 121 for inputting an image signal, a microphone 122 or an audio input module for inputting an audio signal, or a user input unit 123 (for example, a touch key, a push key (or a mechanical key), etc.) for allowing a user to input information. Audio data or image data collected by the input unit 120 may be analyzed and processed by a user's control command.

The sensing unit 140 may include at least one sensor which senses at least one of internal information of the mobile terminal, a surrounding environment of the mobile terminal and user information. For example, the sensing unit 140 may include a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, refer to the camera 121), a microphone 122, a battery gage, an environment sensor (for example, a barometer, a hygrometer, a thermometer, a radiation detection sensor, a thermal sensor, a gas sensor, etc.), and a chemical sensor (for example, an electronic nose, a health care sensor, a biometric sensor, etc.). Further, the mobile terminal disclosed herein may utilize information in such a manner of combining information sensed by at least two sensors of those sensors.

The output unit 150 may be configured to output an audio signal, a video signal or a tactile signal. The output unit 150 may include a display unit 151, an audio output module 152, a haptic module 153, an optical output module 154 and the like. The display unit 151 may have an inter-layered structure or an integrated structure with a touch sensor so as to implement a touch screen. The touch screen may provide an output interface between the mobile terminal 100 and a user, as well as functioning as the user input unit 123 which provides an input interface between the mobile terminal 100 and the user.

The interface unit 160 may serve as an interface with various types of external devices connected with the mobile terminal 100. The interface unit 160, for example, may include wired or wireless headset ports, external power supply ports, wired or wireless data ports, memory card ports, ports for connecting a device having an identification module, audio input/output (I/O) ports, video I/O ports, earphone ports, or the like. The mobile terminal 100 may execute an appropriate control associated with a connected external device, in response to the external device being connected to the interface unit 160.

Furthermore, the memory unit 170 may store data for supporting various functions of the mobile terminal 100. The memory 170 may store a plurality of application programs (or applications) executed in the mobile terminal 100, data for operations of the mobile terminal 100, instruction words, and the like. At least some of those application programs may be downloaded from an external server via wireless communication. Some others of those application programs may be installed within the mobile terminal 100 at the time of being shipped for basic functions of the mobile terminal 100 (for example, receiving a call, placing a call, receiving a message, sending a message, etc.). Further, the application programs may be stored in the memory 170, installed in the mobile terminal 100, and executed by the controller 180 to perform an operation (or a function) of the mobile terminal 100.

The controller 180 can typically control an overall operation of the mobile terminal 100 in addition to the operations associated with the application programs. The controller 180 can provide or process information or functions appropriate for a user by processing signals, data, information and the like, which are input or output by the aforementioned components, or activating the application programs stored in the memory 170.

The controller 180 can control at least part of the components illustrated in FIG. 1A, in order to drive the application programs stored in the memory 170. In addition, the controller 180 can drive the application programs by combining at least two of the components included in the mobile terminal 100 for operation.

The power supply unit 190 may receive external power or internal power and supply appropriate power required for operating respective elements and components included in the mobile terminal 100 under the control of the controller 180. The power supply unit 190 may include a battery, and the battery may be an embedded battery or a replaceable battery.

At least part of those elements and components may be combined to implement operation and control of the mobile terminal or a control method of the mobile terminal according to various embodiments described herein. Also, the operation and control or the control method of the mobile terminal may be implemented in the mobile terminal in such a manner of activating at least one application program stored in the memory 170.

Hereinafter, each aforementioned component will be described in more detail with reference to FIG. 1A, prior to explaining various embodiments implemented by the mobile terminal 100 having the configuration. First, the wireless communication unit 110 will be described. The broadcast receiving module 111 of the wireless communication unit 110 may receive a broadcast signal and/or broadcast associated information from an external broadcast managing entity via a broadcast channel. The broadcast channel may include a satellite channel and a terrestrial channel. At least two broadcast receiving modules 111 may be provided in the mobile terminal 100 to simultaneously receive at least two broadcast channels or switch the broadcast channels.

The mobile communication module 112 may transmit/receive wireless signals to/from at least one of network entities, for example, a base station, an external mobile terminal, a server, and the like, on a mobile communication network, which is constructed according to technical standards or transmission methods for mobile communications (for example, Global System for Mobile Communication (GSM), Code Division Multi Access (CDMA), Wideband CDMA (WCDMA), High Speed Downlink Packet access (HSDPA), Long Term Evolution (LTE), etc.). Here, the wireless signals may include audio call signal, video (telephony) call signal, or various formats of data according to transmission/reception of text/multimedia messages.

The wireless Internet module 113 denotes a module for wireless Internet access. This module may be internally or externally coupled to the mobile terminal 100. The wireless Internet module 113 may transmit/receive wireless signals via communication networks according to wireless Internet technologies.

Examples of such wireless Internet access may include Wireless LAN (WLAN), Wireless Fidelity (Wi-Fi) Direct, Digital Living Network Alliance (DLNA), Wireless Broadband (Wibro), Worldwide Interoperability for Microwave Access (Wimax), High Speed Downlink Packet Access (HSDPA), Long Term Evolution (LTE), and the like. The wireless Internet module 113 may transmit/receive data according to at least one wireless Internet technology within a range including even Internet technologies which are not aforementioned.

From the perspective that the wireless Internet accesses according to Wibro, HSDPA, GSM, CDMA, WCDMA, LET and the like are executed via a mobile communication network, the wireless Internet module 113 which performs the wireless Internet access via the mobile communication network may be understood as a type of the mobile communication module 112.

The short-range communication module 114 denotes a module for short-range communications. Suitable technologies for implementing the short-range communications may include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, and the like. The short-range communication module 114 may support wireless communications between the mobile terminal 100 and a wireless communication system, between the mobile terminal 100 and another mobile terminal 100, or between the mobile terminal and a network where another mobile terminal 100 (or an external server) is located, via wireless personal area networks.

Here, the another mobile terminal 100 may be a wearable device, for example, a smart watch, a smart glass or a head mounted display (HMD), which can exchange data with the mobile terminal 100 (or to cooperate with the mobile terminal 100). The short-range communication module 114 may sense (recognize) a wearable device, which can communicate with the mobile terminal), near the mobile terminal 100. In addition, when the sensed wearable device is a device which is authenticated to communicate with the mobile terminal 100 according to an embodiment of the present invention, the controller 180 can transmit at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user may check the received message using the wearable device.

The location information module 115 denotes a module for detecting or calculating a position of the mobile terminal. An example of the location information module 115 may include a Global Position System (GPS) module or a Wireless Fidelity (Wi-Fi) module. For example, when the mobile terminal uses the GPS module, a position of the mobile terminal may be acquired using a signal sent from a GPS satellite. As another example, when the mobile terminal uses the Wi-Fi module, a position of the mobile terminal may be acquired based on information related to a wireless access point (AP) which transmits or receives a wireless signal to or from the Wi-Fi module. As needed, the location information module 115 may perform any function of another module of the wireless communication unit 110 to obtain data for the location of the mobile terminal in a substituted or additional manner. The location information module 115, as a module used to acquire the location (or current location) of the mobile terminal, is not limited to a module for directly calculating or acquiring the location of the mobile terminal.

Next, the input unit 120 may be configured to provide an audio or video signal (or information) input to the mobile terminal or information input by a user to the mobile terminal. For the input of the audio information, the mobile terminal 100 may include one or a plurality of cameras 121. The camera 121 may process image frames of still pictures or video obtained by image sensors in a video call mode or a capture mode. The processed image frames may be displayed on the display unit 151. Further, the plurality of cameras 121 disposed in the mobile terminal 100 may be arranged in a matrix configuration. By use of the cameras 121 having the matrix configuration, a plurality of image information having various angles or focal points may be input into the mobile terminal 100. Also, the plurality of cameras 121 may be arranged in a stereoscopic structure to acquire a left image and a right image for implementing a stereoscopic image.

The microphone 122 may process an external audio signal into electric audio data. The processed audio data may be utilized in various manners according to a function being executed in the mobile terminal 100 (or an application program being executed). Further, the microphone 122 may include assorted noise removing algorithms to remove noise generated in the course of receiving the external audio signal.

The user input unit 123 may receive information input by a user. When information is input through the user input unit 123, the controller 180 can control an operation of the mobile terminal 100 to correspond to the input information. The user input unit 123 may include a mechanical input element (or a mechanical key, for example, a button located on a front/rear surface or a side surface of the mobile terminal 100, a dome switch, a jog wheel, a jog switch, etc.), and a touch-sensitive input mechanism. As one example, the touch-sensitive input mechanism may be a virtual key, a soft key or a visual key, which is displayed on a touch screen through software processing, or a touch key which is disposed on a portion except for the touch screen. Further, the virtual key or the visual key may be displayable on the touch screen in various shapes, for example, graphic, text, icon, video or a combination thereof.

The sensing unit 140 may sense at least one of internal information of the mobile terminal, surrounding environment information of the mobile terminal and user information, and generate a sensing signal corresponding to it. The controller 180 can control an operation of the mobile terminal 100 or execute data processing, a function or an operation associated with an application program installed in the mobile terminal based on the sensing signal. Hereinafter, description will be given in more detail of representative sensors of various sensors which may be included in the sensing unit 140.

First, a proximity sensor 141 refers to a sensor to sense presence or absence of an object approaching to a surface to be sensed, or an object disposed near a surface to be sensed, by using an electromagnetic field or infrared rays without a mechanical contact. The proximity sensor 141 may be arranged at an inner region of the mobile terminal covered by the touch screen, or near the touch screen. The proximity sensor 141 may have a longer lifespan and a more enhanced utility than a contact sensor.

The proximity sensor 141, for example, may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, the proximity sensor 141 may sense proximity of a pointer to the touch screen by changes of an electromagnetic field, which is responsive to an approach of an object with conductivity. In this instance, the touch screen (touch sensor) may be categorized into a proximity sensor.

Hereinafter, for the sake of brief explanation, a status that the pointer is positioned to be proximate onto the touch screen without contact will be referred to as 'proximity touch,' whereas a status that the pointer substantially comes in contact with the touch screen will be referred to as 'contact touch.' For the position corresponding to the proximity touch of the pointer on the touch screen, such position will correspond to a position where the pointer faces perpendicular to the touch screen upon the proximity touch of the pointer. The proximity sensor 141 may sense proximity touch, and proximity touch patterns (e.g., distance, direction, speed, time, position, moving status, etc.). Further, the controller 180 can process data (or information) corresponding to the proximity touches and the proximity touch patterns sensed by the proximity sensor 141, and output visual information corresponding to the process data on the touch screen. In addition, the controller 180 can control the mobile terminal 100 to execute different operations or process different data (or information) according to whether a touch with respect to the same point on the touch screen is either a proximity touch or a contact touch.

A touch sensor may sense a touch (or touch input) applied onto the touch screen (or the display unit 151) using at least one of various types of touch methods, such as a resistive type, a capacitive type, an infrared type, a magnetic field type, and the like. As one example, the touch sensor may be configured to convert changes of pressure applied to a specific part of the display unit 151 or a capacitance occurring from a specific part of the display unit 151, into electric input signals. Also, the touch sensor may be configured to sense not only a touched position and a touched area, but also touch pressure. Here, a touch object is an object to apply a touch input onto the touch sensor. Examples of the touch object may include a finger, a touch pen, a stylus pen, a pointer or the like.

When touch inputs are sensed by the touch sensors, corresponding signals may be transmitted to a touch controller. The touch controller may process the received signals, and then transmit corresponding data to the controller 180. Accordingly, the controller 180 can sense which region of the display unit 151 has been touched. Here, the touch controller may be a component separate from the controller 180 or the controller 180 itself.

Further, the controller 180 can execute a different control or the same control according to a type of an object which touches the touch screen (or a touch key provided in addition to the touch screen). Whether to execute the different control or the same control according to the object which gives a touch input may be decided based on a current operating state of the mobile terminal 100 or a currently executed application program. Meanwhile, the touch sensor and the proximity sensor may be executed individually or in combination, to sense various types of touches, such as a short (or tap) touch, a long touch, a multi-touch, a drag touch, a flick touch, a pinch-in touch, a pinch-out touch, a swipe touch, a hovering touch, and the like.

An ultrasonic sensor may be configured to recognize position information relating to a sensing object by using ultrasonic waves. The controller 180 can calculate a position of a wave generation source based on information sensed by an illumination sensor and a plurality of ultrasonic sensors. Since light is much faster than ultrasonic waves, a time for which the light reaches the optical sensor may be much shorter than a time for which the ultrasonic wave reaches the ultrasonic sensor. The position of the wave generation source may be calculated using the fact. In more detail, the position of the wave generation source may be calculated by using a time difference from the time that the ultrasonic wave reaches based on the light as a reference signal.

The camera 121 constructing the input unit 120 may be a type of camera sensor. The camera sensor may include at least one of a photo sensor and a laser sensor. The camera 121 and the laser sensor may be combined to detect a touch of the sensing object with respect to a 3D stereoscopic image. The photo sensor may be laminated on the display device. The photo sensor may be configured to scan a movement of the sensing object in proximity to the touch screen. In more detail, the photo sensor may include photo diodes and transistors at rows and columns to scan content placed on the photo sensor by using an electrical signal which changes according to the quantity of applied light. Namely, the photo sensor may calculate the coordinates of the sensing object according to variation of light to thus obtain position information of the sensing object.

The display unit 151 may output information processed in the mobile terminal 100. For example, the display unit 151 may display execution screen information of an application program driven in the mobile terminal 100 or user interface (UI) and graphic user interface (GUI) information in response to the execution screen information.

The display unit 151 may also be implemented as a stereoscopic display unit for displaying stereoscopic images. The stereoscopic display unit 152 may employ a stereoscopic display scheme such as stereoscopic scheme (a glass scheme), an auto-stereoscopic scheme (glassless scheme), a projection scheme (holographic scheme), or the like.

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may also provide audible output signals related to a particular function (e.g., a call signal reception sound, a message reception sound, etc.) performed by the mobile terminal 100. The audio output module 152 may include a receiver, a speaker, a buzzer or the like.

A haptic module 153 may generate various tactile effects the user may feel. A typical example of the tactile effect generated by the haptic module 153 may be vibration. Strength, pattern and the like of the vibration generated by the haptic module 153 may be controllable by a user selection or setting of the controller. For example, the haptic module 153 may output different vibrations in a combining manner or a sequential manner.

Besides vibration, the haptic module 153 may generate various other tactile effects, including an effect by stimulation such as a pin arrangement vertically moving with respect to a contact skin, a spray force or suction force of air through a jet orifice or a suction opening, a touch on the skin, a contact of an electrode, electrostatic force, etc., an effect by reproducing the sense of cold and warmth using an element that can absorb or generate heat, and the like.

The haptic module 153 may be implemented to allow the user to feel a tactile effect through a muscle sensation such as the user's fingers or arm, as well as transferring the tactile effect through a direct contact. Two or more haptic modules 153 may be provided according to the configuration of the mobile terminal 100.

An optical output module 154 may output a signal for indicating an event generation using light of a light source. Examples of events generated in the mobile terminal 100 may include a message reception, a call signal reception, a missed call, an alarm, a schedule notice, an email reception, an information reception through an application, and the like. A signal output by the optical output module 154 may be implemented so the mobile terminal emits monochromatic light or light with a plurality of colors. The signal output may be terminated as the mobile terminal senses a user's event checking.

The interface unit 160 may serve as an interface with every external device connected with the mobile terminal 100. For example, the interface unit 160 may receive data transmitted from an external device, receive power to transfer to each element within the mobile terminal 100, or transmit internal data of the mobile terminal 100 to an external device. For example, the interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (referred to as 'identifying device', hereinafter) may take the form of a smart card. Accordingly, the identifying device may be connected with the terminal 100 via the interface unit 160.

When the mobile terminal 100 is connected with an external cradle, the interface unit 160 may serve as a passage to allow power from the cradle to be supplied to the mobile terminal 100 therethrough or may serve as a passage to allow various command signals input by the user from the cradle to be transferred to the mobile terminal therethrough. Various command signals or power input from the cradle may operate as signals for recognizing that the mobile terminal is properly mounted on the cradle.

The memory 170 may store programs for operations of the controller 180 and temporarily store input/output data (for example, phonebook, messages, still images, videos, etc.). The memory 170 may store data related to various patterns of vibrations and audio which are output in response to touch inputs on the touch screen.

The memory 170 may include at least one type of storage medium including a Flash memory, a hard disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 170 over the Internet.

As aforementioned, the controller 180 can typically control the general operations of the mobile terminal 100. For example, the controller 180 can set or release a lock state for restricting a user from inputting a control command with respect to applications when a status of the mobile terminal meets a preset condition.

The controller 180 can also perform controlling and processing associated with voice calls, data communications, video calls, and the like, or perform pattern recognition processing to recognize a handwriting input or a picture drawing input performed on the touch screen as characters or images, respectively. In addition, the controller 180 can control one or combination of those components in order to implement various embodiment disclosed herein on the mobile terminal 100.

The power supply unit 190 may receive external power or internal power and supply appropriate power required for operating respective elements and components included in the mobile terminal 100 under the control of the controller 180. The power supply unit 190 may include a battery. The battery may be an embedded battery which is rechargeable or be detachably coupled to the terminal body for charging.

The power supply unit 190 may include a connection port. The connection port may be configured as one example of the interface unit 160 to which an external (re)charger for supplying power to recharge the battery is electrically connected. As another example, the power supply unit 190 may be configured to recharge the battery in a wireless manner without use of the connection port. Here, the power supply unit 190 may receive power, transferred from an external wireless power transmitter, using at least one of an inductive coupling method which is based on magnetic induction or a magnetic resonance coupling method which is based on electromagnetic resonance. Various embodiments described herein may be implemented in a computer-readable or its similar medium using, for example, software, hardware, or any combination thereof.

Referring to FIGS. 1B and 1C, the mobile terminal 100 disclosed herein may be provided with a bar-type terminal body. However, the present invention may not be limited to this, but also may be applicable to various structures such as watch type, clip type, glasses type or folder type, flip type, slide type, swing type, swivel type, or the like, in which two and more bodies are combined with each other in a relatively movable manner. The present invention may be associated with a specific type of mobile terminal, but the description of the specific type of the mobile terminal may be applicable to another type of mobile terminal.

The mobile terminal 100 may include a case (casing, housing, cover, etc.) forming the appearance of the terminal. In this embodiment, the case may be divided into a front case 101 and a rear case 102. Various electronic components may be incorporated into a space formed between the front case 101 and the rear case 102. At least one middle case may be additionally disposed between the front case 101 and the rear case 102

A display unit 151 may be disposed on a front surface of the terminal body to output information. As illustrated, a window 151a of the display unit 151 may be mounted to the front case 101 so as to form the front surface of the terminal body together with the front case 101. In some cases, electronic components may also be mounted to the rear case 102. Examples of those electronic components mounted to the rear case 102 may include a detachable battery, an identification module, a memory card and the like. Here, a rear cover 103 for covering the electronic components mounted may be detachably coupled to the rear case 102. Therefore, when the rear cover 103 is detached from the rear case 102, the electronic components mounted to the rear case 102 may be externally exposed.

As illustrated, when the rear cover 103 is coupled to the rear case 102, a side surface of the rear case 102 may be partially exposed. In some cases, upon the coupling, the rear case 102 may also be completely shielded by the rear cover 103. Further, the rear cover 103 may include an opening for externally exposing a camera 121b or an audio output module 152b.

The cases 101, 102, 103 may be formed by injection-molding synthetic resin or may be formed of a metal, for example, stainless steel (STS), titanium (Ti), or the like. Unlike the example which the plurality of cases form an inner space for accommodating such various components, the mobile terminal 100 may be configured such that one case forms the inner space. In this example, a mobile terminal 100 having a uni-body formed so synthetic resin or metal extends from a side surface to a rear surface may also be implemented.

Further, the mobile terminal 100 may include a waterproofing unit for preventing an introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal may include a display unit 151, first and second audio output modules 152a and 152b, a proximity sensor 141, an illumination sensor 152, an optical output module 154, first and second cameras 121a and 121b, first and second manipulation units 123a and 123b, a microphone 122, an interface unit 160 and the like.

Hereinafter, description will be given of an mobile terminal 100 that the display unit 151, the first audio output module 152a, the proximity sensor 141, the illumination sensor 142, the optical output module 154, the first camera 121a and the first manipulation unit 123a are disposed on the front surface of the terminal body, the second manipulation unit 123b, the microphone 122 and the interface unit 160 are disposed on a side surface of the terminal body, and the second audio output module 152b and the second camera 121b are disposed on a rear surface of the terminal body, with reference to FIGS. 1B and 1C.

Here, those components may not be limited to the arrangement, but be excluded or arranged on another surface if necessary. For example, the first manipulation unit 123a may not be disposed on the front surface of the terminal body, and the second audio output module 152b may be disposed on the side surface other than the rear surface of the terminal body.

The display unit 151 may output information processed in the mobile terminal 100. For example, the display unit 151 may display execution screen information of an application program driven in the mobile terminal 100 or user interface (UI) and graphic user interface (GUI) information in response to the execution screen information.

The display unit 151 may include at least one of a liquid crystal display (LCD), a thin film transistor-liquid crystal display (TFT-LCD), an organic light emitting diode (OLED), a flexible display, a 3-dimensional (3D) display, and an e-ink display. The display unit 151 may be implemented in two or more in number according to a configured aspect of the mobile terminal 100. For instance, a plurality of the display units 151 may be arranged on one surface to be spaced apart from or integrated with each other, or may be arranged on different surfaces.

The display unit 151 may include a touch sensor which senses a touch onto the display unit so as to receive a control command in a touching manner. When a touch is input to the display unit 151, the touch sensor may be configured to sense this touch and the controller 180 can generate a control command corresponding to the touch. The content which is input in the touching manner may be a text or numerical value, or a menu item which can be indicated or designated in various modes.

The touch sensor may be configured in a form of film having a touch pattern. The touch sensor may be a metal wire, which is disposed between the window 151a and a display on a rear surface of the window 151a or patterned directly on the rear surface of the window 151a. Or, the touch sensor may be integrally formed with the display. For example, the touch sensor may be disposed on a substrate of the display or within the display.

The display unit 151 may form a touch screen together with the touch sensor. Here, the touch screen may serve as the user input unit 123 (see FIG. 1A). Therefore, the touch screen may replace at least some of functions of the first manipulation unit 123a. The first audio output module 152a may be implemented in the form of a receiver for transferring voice sounds to the user's ear or a loud speaker for outputting various alarm sounds or multimedia reproduction sounds.

The window 151a of the display unit 151 may include a sound hole for emitting sounds generated from the first audio output module 152a. Here, the present invention may not be limited to this. It may also be configured such that the sounds are released along an assembly gap between the structural bodies (for example, a gap between the window 151a and the front case 101). In this instance, a hole independently formed to output audio sounds may not be seen or hidden in terms of appearance, thereby further simplifying the appearance of the mobile terminal 100.

The optical output module 154 may output light for indicating an event generation. Examples of the event generated in the mobile terminal 100 may include a message reception, a call signal reception, a missed call, an alarm, a schedule notice, an email reception, information reception through an application, and the like. When a user's event checking is sensed, the controller may control the optical output unit 154 to stop the output of the light. The first camera 121a may process video frames such as still or moving images obtained by the image sensor in a video call mode or a capture mode. The processed video frames may be displayed on the display unit 151 or stored in the memory 170.

The first and second manipulation units 123a and 123b are examples of the user input unit 123, which may be manipulated by a user to input a command for controlling the operation of the mobile terminal 100. The first and second manipulation units 123a and 123b may also be commonly referred to as a manipulating portion, and may employ any method if it is a tactile manner allowing the user to perform manipulation with a tactile feeling such as touch, push, scroll or the like.

The drawings are illustrated on the basis that the first manipulation unit 123a is a touch key, but the present invention is not limited to this. For example, the first manipulation unit 123a may be configured with a mechanical key, or a combination of a touch key and a push key.

The content received by the first and second manipulation units 123a and 123b may be set in various ways. For example, the first manipulation unit 123a may be used by the user to input a command such as menu, home key, cancel, search, or the like, and the second manipulation unit 123b may be used by the user to input a command, such as controlling a volume level being output from the first or second audio output module 152a or 152b, switching into a touch recognition mode of the display unit 151, or the like.

Further, as another example of the user input unit 123, a rear input unit may be disposed on the rear surface of the terminal body. The rear input unit may be manipulated by a user to input a command for controlling an operation of the mobile terminal 100. The content input may be set in various ways. For example, the rear input unit may be used by the user to input a command, such as power on/off, start, end, scroll or the like, controlling a volume level being output from the first or second audio output module 152a or 152b, switching into a touch recognition mode of the display unit 151, or the like. The rear input unit may be implemented into a form allowing a touch input, a push input or a combination thereof.

The rear input unit may be disposed to overlap the display unit 151 of the front surface in a thickness direction of the terminal body. As one example, the rear input unit may be disposed on an upper end portion of the rear surface of the terminal body such that a user can easily manipulate it using a forefinger when the user grabs the terminal body with one hand. However, the present invention may not be limited to this, and the position of the rear input unit may be changeable.

When the rear input unit is disposed on the rear surface of the terminal body, a new user interface may be implemented using the rear input unit. Also, the aforementioned touch screen or the rear input unit may substitute for at least part of functions of the first manipulation unit 123a located on the front surface of the terminal body. Accordingly, when the first manipulation unit 123a is not disposed on the front surface of the terminal body, the display unit 151 may be implemented to have a larger screen.

Further, the mobile terminal 100 may include a finger scan sensor which scans a user's fingerprint. The controller may use fingerprint information sensed by the finger scan sensor as an authentication means. The finger scan sensor may be installed in the display unit 151 or the user input unit 123.The microphone 122 may be formed to receive the user's voice, other sounds, and the like. The microphone 122 may be provided at a plurality of places, and configured to receive stereo sounds.

The interface unit 160 may serve as a path allowing the mobile terminal 100 to exchange data with external devices. For example, the interface unit 160 may be at least one of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b may be further mounted to the rear surface of the terminal body. The second camera 121b may have an image capturing direction, which is substantially opposite to the direction of the first camera unit 121a. The second camera 121b may include a plurality of lenses arranged along at least one line. The plurality of lenses may also be arranged in a matrix configuration. The cameras may be referred to as an 'array camera.' When the second camera 121b is implemented as the array camera, images may be captured in various manners using the plurality of lenses and images with better qualities may be obtained.

A flash 124 may be disposed adjacent to the second camera 121b. When an image of a subject is captured with the camera 121b, the flash 124 may illuminate the subject. The second audio output module 152b may further be disposed on the terminal body. The second audio output module 152b may implement stereophonic sound functions in conjunction with the first audio output module 152a (refer to FIG. 1A), and may be also used for implementing a speaker phone mode for call communication.

At least one antenna for wireless communication may be disposed on the terminal body. The antenna may be installed in the terminal body or formed on the case. For example, an antenna which configures a part of the broadcast receiving module 111 may be retractable into the terminal body. Alternatively, an antenna may be formed in a form of film to be attached onto an inner surface of the rear cover 103 or a case including a conductive material may serve as an antenna.

A power supply unit 190 for supplying power to the mobile terminal 100 may be disposed on the terminal body. The power supply unit 190 may include a batter 191 which is mounted in the terminal body or detachably coupled to an outside of the terminal body. The battery 191 may receive power via a power source cable connected to the interface unit 160. Also, the battery 191 may be (re)chargeable in a wireless manner using a wireless charger. The wireless charging may be implemented by magnetic induction or electromagnetic resonance.

Further, the drawing illustrates that the rear cover 103 is coupled to the rear case 102 for shielding the battery 191, so as to prevent separation of the battery 191 and protect the battery 191 from an external impact or foreign materials. When the battery 191 is detachable from the terminal body, the rear case 103 may be detachably coupled to the rear case 102.

An accessory for protecting an appearance or assisting or extending the functions of the mobile terminal 100 may further be provided on the mobile terminal 100. As one example of the accessory, a cover or pouch for covering or accommodating at least one surface of the mobile terminal 100 may be provided. The cover or pouch may cooperate with the display unit 151 to extend the function of the mobile terminal 100. Another example of the accessory may be a touch pen for assisting or extending a touch input onto a touch screen.

Further, a mobile terminal according to an embodiment of the present invention capable of including at least one of the foregoing constituent elements may execute an image capture function. Here, the image may include still images, videos, and the like, and the image capture function may include a still image capture function and a video capture function. Hereinafter, for the sake of convenience of explanation, term "image" may be used, and the image includes still images, videos, and the like as described above.

The image capture function may be performed based on an icon (or icon of an application) being selected (or touched). When an image capture function is performed through the icon, the display unit 151 may be in an "on" state. Further, the image capture function may be performed when a key (for example, at least one of a hardware key and a software key) provided in the mobile terminal in addition to the method of selecting an icon linked with the image capture function. In this instance, even when the display unit 151 is in an "off" state, it is possible to execute an image capture function in response to a key provided in the mobile terminal being selected.

A mobile terminal according to an embodiment of the present invention may display an image received through the camera on the display unit 151 as the image capture function is performed. Specifically, the mobile terminal can display an image being received through the camera in real time on the display unit 151. Here, an image received through the camera may be expressed as a "preview image", an "image" or the like.

The execution of the image capture function may denote executing an application driven for image capture. When an image capture function is performed, the controller 180 of the mobile terminal may activate the camera 121 to be prepared for the state of capturing an image. Furthermore, the controller 180 can display an image received through the activated camera 121 on the display unit 151. Here, according to an embodiment of the present invention, the image received through the activated camera 121 on the display unit 151 is defined as a "preview image". Furthermore, when an image capture function is performed based on a user's selection, the controller 180 can store a preview image being displayed on the display unit 151 in the memory 170.

A mobile terminal according to an embodiment of the present invention may provide an image capture function for storing an image (or preview image) received through the camera in the memory. Here, the operation of the mobile terminal for an image received through the camera in the memory may be expressed as "taking an image", "obtaining an image", "capturing an image", "taking a preview image", "taking on a preview image", "processing a capture command for a preview image", "performing a capture function for a preview image", or the like. Furthermore, any expression can be freely used if it has a meaning for storing an image received from the camera in the memory without being restricted to the foregoing expressions.

According to an embodiment of the present invention, a mobile terminal can perform an image capture operation based on a user's selection, and the user's selection may be expressed as a "user's control command" or "control command. Meanwhile, the user's selection can be performed in various ways, and for example, the user may make a touch or pressure to a hardware key provided in the mobile terminal or make a touch to at least one of software keys or visual keys displayed on the display unit 151 to perform an image capture operation. In other words, when a hardware key linked with an image capture function is touched or pressed or at least one of software keys or visual keys displayed on the display unit 151 is touched, the controller 180 can determine that a user's control command for performing an image capture operation has been received. The controller 180 can capture an image received through the camera 121 based on such a control command. Furthermore, in addition to the examples, an image capture function may be performed when a user voice corresponding to a preset instruction is received or a specific gesture is applied to the mobile terminal or a preset movement is sensed on the mobile terminal.

Further, a mobile terminal according to an embodiment of the present invention may perform various functions based on a touch being applied to one region of the display unit 151 on which a preview image is displayed. The various functions may include a focus adjustment function, an image capture function, and the like. For example, when a touch is applied to one region of the screen on which a preview image is displayed when the preview image is displayed on the display unit 151, the controller 180 can adjust the focus around one region to which the touch is applied.

In another example, when a touch is applied to one region of the screen on which a preview image is displayed when the preview image is displayed on the display unit 151, the controller 180 can determine that a user's control command for performing an image capture operation has been received. For still another example, the controller 180 can adjust the focus around the one region based on at least one touch being applied to one region of the screen on which the preview image is displayed, and then perform an operation of capturing the preview image for which the focus has been adjusted.

As described above, a function of adjusting focus around one region according to a touch being applied to the one region of the screen on which a preview image is displayed is defined as a touch auto focus (TAF). Further, a mobile terminal according to an embodiment of the present invention can perform a continuous auto focus (CAF) (hereinafter, referred to as an "automatic focus adjustment function") for automatically adjusting focus even without applying an additional touch to the preview image. The automatic focus adjustment function may be periodically performed whenever a preset period of time has passed when the preview image is displayed or when the preview image is changed according to the movement of the body mounted with a camera.

A mobile terminal according to an embodiment of the present can adjust the focus around one region of the screen on which a preview image is displayed using the automatic focus adjustment function. For example, when a preview image is displayed, the controller can adjust the focus around a region located at the center of the screen on which the preview image is displayed. Furthermore, the controller 180 can detect a user's eyes using the camera, and adjust the focus around one region in which the eyes are detected.

In another example, the controller 180 can determine one region in which focus is to be automatically adjusted through an image analysis on the preview image. For example, the one region in which focus is to be automatically adjusted may be determined as a region corresponding to an object occupying the largest area of the preview image, a region corresponding to an object containing an identifiable outline, a region corresponding to an object in which at least one of brightness and chroma in contrast to the surrounding object is above a threshold value, and the like.

Further, a preview image 290 displayed on the display unit 151 may include at least one graphic object 300. A graphic object displayed on the preview image 290 may denote a subject (body) to be captured using a camera by the user.

Further, when a touch is applied to at least one of graphic objects contained in the preview image 290, the controller 180 can recognize (extract) a graphic object to which the touch is applied. Recognizing the graphic object can denote being extracted as one target object based on the shape (form), color, depth value, feature, text, image, and the like of the graphic object. Here, the graphic object may include all types of objects desired to be captured by the user such as a building, a text, a photo, a picture, a face, a map, an electronic device (external device), an automobile, a robot, a barcode, a QR code, and the like.

Recognizing the graphic object may be performed based on various schemes. For example, a graphic object to which the touch is applied may be extracted as one target object using an image analysis scheme, a text extraction scheme, a face recognition scheme, or the like for a preview image (methods for extracting a graphic object contained in an image such as the image analysis scheme, a text extraction scheme, a face recognition scheme, or the like are departed from the gist of the present invention, and thus the detailed description thereof will be omitted).

Hereinafter, applying a touch to at least one graphic object contained in the preview image 290 includes the meaning of recognizing a graphic object to which a touch is applied as one target object. Furthermore, a graphic object to which a touch is applied may be regarded the same as a graphic object for which focus is automatically adjusted (controlled) according to an automatic focus adjustment function when a preview image is displayed on the display unit.

Further, when a touch is applied to at least one of graphic objects 300 contained in the preview image 290, a mobile terminal according to an embodiment of the present invention can display information 310 associated with a graphic object to which the touch is applied on the display unit 151. Here, the information 310 associated with the graphic object may be information associated with a graphic object recognized as one target object according to a touch being applied to at least one graphic object contained in the preview image.

Furthermore, information 310 associated with the graphic object may vary according to the type of the graphic object 300 to which a touch is applied on the preview image 290. The controller 180 can recognize a graphic object to which a touch is applied among graphic objects contained in the preview image 290, and distinguish the type of the graphic object based on the recognized graphic object. The type of the graphic object may include all objects that can be identified as one body such as a building, a text, a photo, a picture, a face, a map, an electronic device (external device), an automobile, a robot, a barcode, a QR code, and the like. The controller 180 can classify the type of the recognized graphic object based on data stored in the memory 170 or data received through communication with an external server (or external device).

Here, the process of classifying the type of an object may be performed based on a user request. For example, the user request may be applying a preset type of touch to an indicator indicating that there is information associated with the graphic object. In other words, the controller may not request data for classifying the type of a graphic object to which the touch is applied or information associated with a graphic object to an external server prior to applying a preset type of touch to the indicator. Accordingly, when a user does not want to have associated information according to an embodiment of the present invention, communication may not be additionally performed with an external server and thus data capacity required for communication with the external server may not be indiscreetly consumed.

Further, information 310 associated with a graphic object to which a touch is applied on the preview image 290 may include at least one category. Here, the category may denote a type of associated information 310. In other words, information associated with any one graphic object may include at least one category (type), and for example, the category may include detailed information, path information, web search information, dictionary information, information associated with an image (URL address, etc.), information associated with video, associated application information, device-capable-of-communication information, and the like. The associated information may include various information that are not listed in the above, and will be additionally described with reference to the accompanying drawings.

Further, the controller 180 can display at least one of the preview image 290 and associated information 310 on the display unit 151. Specifically, the controller 180 can display the associated information 310 to overlap with one region of the screen on which the preview image 290 is displayed based on a preset type of touch being applied to the display unit 151 when the preview image 290 is displayed. In other words, the display of the preview image 290 may be maintained according to the camera maintaining an active state even when the associated information 310 is displayed on the display unit 151. The size of the one region may be a preset size or may be changed based on a preset type of touch being applied.

Further, the controller 180 can perform an image capture operation for the preview image 290 when information 310 associated with a graphic object to which a touch is applied among graphic objects 300 contained in the preview image 290 is displayed. In this instance, the image-captured preview image 290 may be stored in the memory 170 in connection with the information 310 associated with the graphic object. For example, when an image capture operation is performed when the associated information 310 is displayed on the display unit 151, at least one of an original image corresponding to the captured preview image and an image file linked with the original image and the associated information 310 may be stored in the memory 170.

As described above, according to an embodiment of the present invention, information associated with a graphic object contained in a preview image may be provided while at the same time performing an image capture function. Accordingly, when a user wants to receive information associated with a graphic object contained in a preview image while performing an image capture function, he or she can receive the associated information while at the same time performing the image capture function other than terminating the image capture function and performing another additional function, thereby enhancing user's convenience.

Furthermore, according to an embodiment of the present invention, when an image capture operation is performed when information associated with a graphic object contained in a preview image is displayed, the preview image and associated information can be stored at the same time. Therefore, according to an embodiment of the present invention, it possible to remove the inconvenience that a user should additionally store associated information received while performing an image capture function, and satisfy the user's need for receiving associated information when checking the captured image.

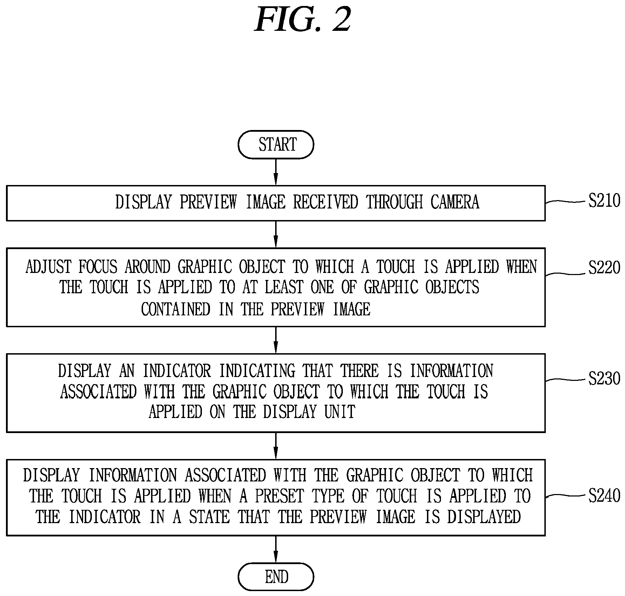

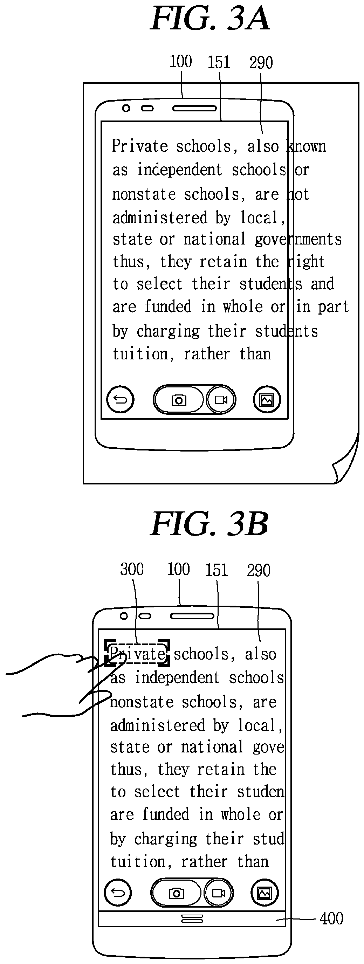

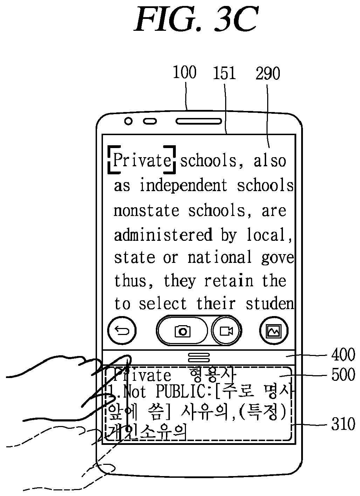

Hereinafter, a method of providing information associated with at least one graphic object contained in a preview image displayed on the display unit as performing an image capture function will be described in more detail with reference to the accompanying drawings. In particular, FIG. 2 is a flow chart illustrating a control method of the present invention, and FIG. 3A, 3B and 3C is a conceptual view illustrating a control method shown in FIG. 2.

First, referring to FIG. 2, the process of executing an image capture function based on a user request is performed. When executing the image capture function, a preview image 290 received through a camera is displayed on the display unit 151 (S210). As described above, the preview image 290 may include at least one graphic object 300, and the graphic object 300 may denote a subject (body) contained in an image received through the camera.

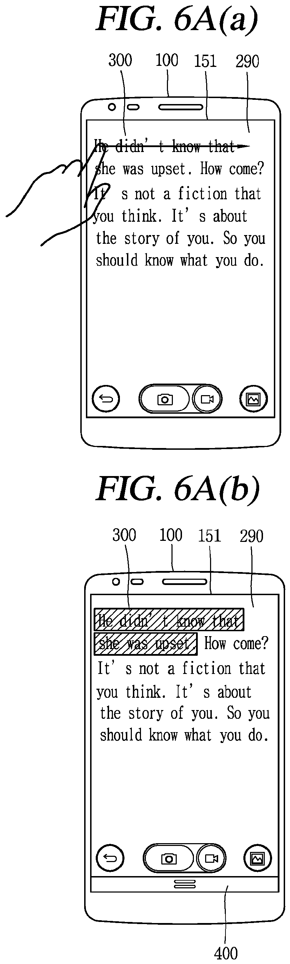

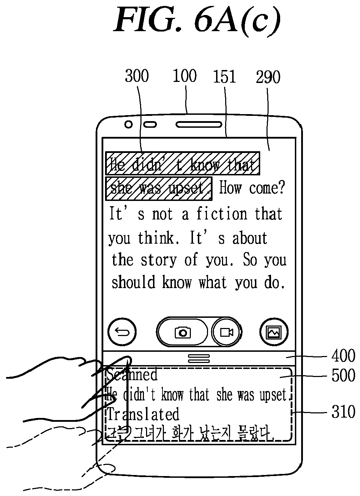

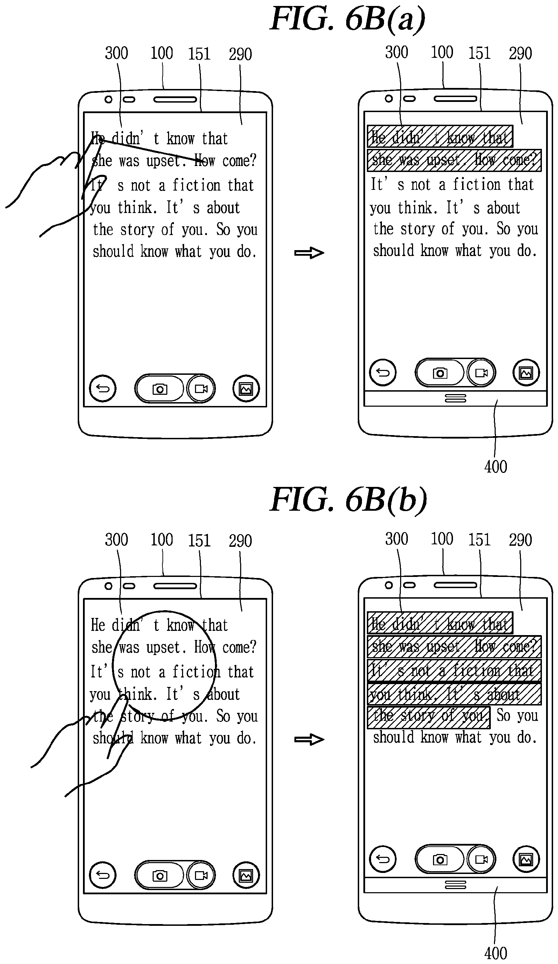

FIG. 3A illustrates an example in which text is contained in the preview image 290. Hereinafter, for the sake of convenience of explanation, one graphic object 300 is defined as one word. However, it is not limited to this, and when a sentence containing at least one word is selected according to a user request, the sentence may be processed as one graphic object 300 (a method of processing a sentence as one graphic object to provide information associated with the graphic object will be described in more detail with reference to FIGS. 6A and 6B).

Furthermore, even though text is contained in the preview image 290 illustrated in FIGS. 3 through 7C, it is merely to describe a graphic object contained in the preview image as text, for example, but is not limited to this. In other words, the content described below may be applicable in the same or similar manner even when a graphic object contained in the preview image includes all objects that can be identified as one body such as a building, a text, a photo, a picture, a face, a map, an electronic device, an automobile, a robot, a barcode, a QR code, and the like.

Then, when a touch is applied to at least one of graphic objects 300 contained in the preview image 290, the process of adjusting focus around a graphic object to which the touch is applied is performed (S220). Specifically, when a touch is applied to one region of the screen on which the preview image 290 is displayed, the controller 180 can adjust the focus around one region to which the touch is applied. When it is determined that a graphic object 300 exists in one region to which the touch is applied to the screen on which the preview image 290 is displayed, the controller 180 can adjust the focus around the graphic object 300.

For example, as illustrated in FIG. 3B, when a touch is applied to any one 300 graphic object (for example, Private) of graphic objects displayed on the preview image 290, the controller 180 can adjust the focus around the graphic object 300 to which the touch is applied. Furthermore, as described above, the controller 180 can automatically adjust the focus on any one of graphic objects displayed on the preview image 290 using an automatic focus adjustment function.

Then, the process of displaying an indicator 400 indicating that there is information associated with a graphic object 300 to which a touch is applied on the display unit 151 is performed (S230). Specifically, when it is determined that a touch is applied to one region displayed with the preview image 290 and a graphic object recognized as one target object exists in the one region, the controller 180 can display the indicator 400 indicating that there is information associated with the graphic object on the display unit 151.

Further, when focus is adjusted to at least one of graphic objects contained in the preview image 290 through an automatic focus adjustment function, the controller 180 can display the indicator 400 indicating that there is information associated with the focus-adjusted graphic object on the display unit 151.

When information 310 associated with a graphic object exists for the graphic object 300 to which a touch is applied or the graphic object to which focus is adjusted, the indicator 400 performs the role of notifying that there is the associated information 310. The indicator 400 may be displayed in various forms on the display unit 151.

Specifically, the indicator 400 may be have any form if it has a form distinguished from an icon (or graphic object) (for example, a capture button, a setting button, a playback button, etc.) associated with a capture function previously displayed to overlap with the preview image 290, and may be implemented in the form of an icon, an image, a bar or the like as an example. For example, referring to FIG. 3B, the indicator 400 may be displayed one side of the display unit 151, and the form may have a bar shape.

Further, a location at which the indicator 400 is displayed may be determined based on a position at which a graphic object to which the touch is applied or a position at which a graphic object to which focus is adjusted. For example, when a graphic object to which the touch is applied (or focus is adjusted) is located at one side (or a region adjacent to one side) of the screen in which the preview image 290 is displayed, the indicator 400 may be displayed on the other side opposite to said one side. In another example, when a space (region) in which one region for displaying associated information is secured between the one side and a graphic object to which the touch is applied (or focus is adjusted) even when a graphic object to which the touch is applied (or focus is adjusted) is located at one side (or a region adjacent to one side) of the screen in which the preview image 290 is displayed, the indicator 400 may be displayed one side of the display unit 151. For example, when the size of one region for displaying associated information is preset, the controller 180 can determine that a space for displaying said one region is secured based on the size of the preset one region.

When a preset type of touch is applied to the indicator 400 when a preview image is displayed, the process of displaying information 310 associated with a graphic object to which the touch is applied (or focus is adjusted) is performed (S240). Specifically, the controller 180 can display the indicator 400 at one side of the display unit 151. Here, when the preview image 290 is displayed on the entire display region of the display unit 151, the indicator 400 may be displayed to overlap with the preview image 290. In other words, the display of the preview image 290 may be maintained even when the indicator 400 is displayed on the display unit 151. Maintaining the display of the preview image 290 may denote continuously executing an image capture function. Subsequently, when a preset type of touch is applied to the indicator 400, the controller 180 can display information 310 associated with a graphic object to which the touch is applied (or focus is adjusted) on the display unit 151.

A preset type of touch is applied to the indicator 400 to display the associated information 310 may include various types of touches. For example, the preset type of touch may include any one of a short (or tap) touch, a long touch, a multi touch, a drag touch, a flick touch, a pinch-in touch, a pinch-out touch, a swipe touch, and a hovering touch.

Hereinafter, it will be described that the preset type of touch is a drag touch started from the indicator 400, for example. The controller 180 can display information 310 associated with a graphic object to which the touch is applied based on a preset type of touch being applied to the indicator 400. Specifically, the indicator 400 may be displayed at one side of the display unit 151, and the preset type of touch may be a drag touch started from the indicator 400. The controller 180 can display information 310 associated with a graphic object to which the touch is applied based on the drag touch being applied to the indicator 400.

The information 310 associated with the graphic object may be displayed in one region 500 of the display unit 151. The one region 500 may be set based on a drag touch applied to the indicator 400. Furthermore, the size of the one region may be changed based on a drag touch applied to the indicator 400.

For example, the controller 180 can set (display) one region 500 of the display unit 151 for displaying the associated information 310 based on a drag touch started from the indicator 400 as illustrated in FIG. 3C. Furthermore, the controller 180 can display information 310 associated with a graphic object to which the touch is applied in the set region 500. Here, the size of the one region 500 may vary according to the drag touch.

In another example, the controller 180 can display associated information in one region 500 of the display unit 151 based on a preset type of touch (for example, long touch or double touch) is applied to the indicator 400. Here, when a long touch or double touch is applied to the indicator 400, the controller 180 can set the one region 500 to have a preset size, and display associated information 310 in the one region 500.

Furthermore, when the size of the one region set by a drag touch started from the indicator 400 is less than a preset size, the controller 180 can extend the size of the one region 500 set by the drag touch to a preset size. Further, when the focus is automatically adjusted to at least one graphic object 300 of graphic objects contained in the preview image, the controller 180 can display the indicator 400 indicating that there is information associated with a graphic object to which the focus is adjusted on the display unit. Furthermore, when the preset type of touch is applied to the indicator, the controller 180 can display information 310 associated with a graphic object to which the focus is adjusted on the display unit.

When a touch is applied to a region in which the preview image is displayed when the associated information 310 is displayed, the controller 180 can capture the preview image 290, and store the captured preview image 290 and the displayed associated information 310 in a linked manner in the memory 170.

In other words, one embodiment of the present invention can display associated information on a graphic object to which the touch is applied or a graphic object to which focus is automatically adjusted. Hereinafter, it will be described around a graphic object to which the touch is applied. However, the content described around a graphic object to which the touch is applied may be also applicable in the same or similar manner to the content described around a graphic object to which focus is automatically adjusted.

As described above, according to one embodiment of the present invention, information associated with any one of graphic objects contained in the preview image can be displayed when the preview image is displayed. Therefore, according to an embodiment of the present invention it is possible to satisfy the user's need for receiving information associated with the preview image while performing an image capture function.

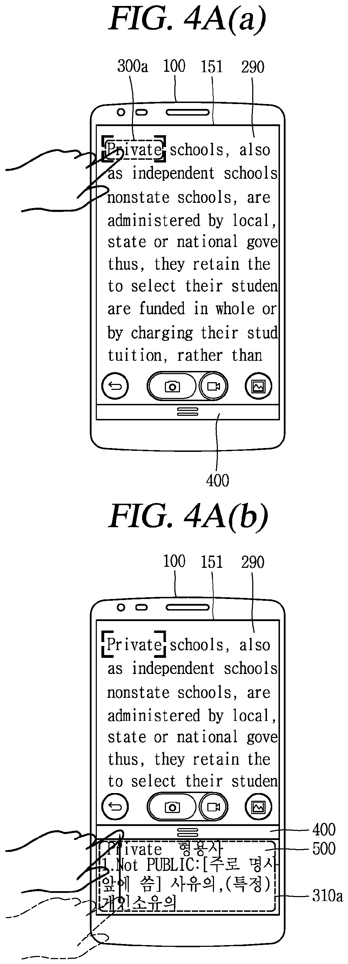

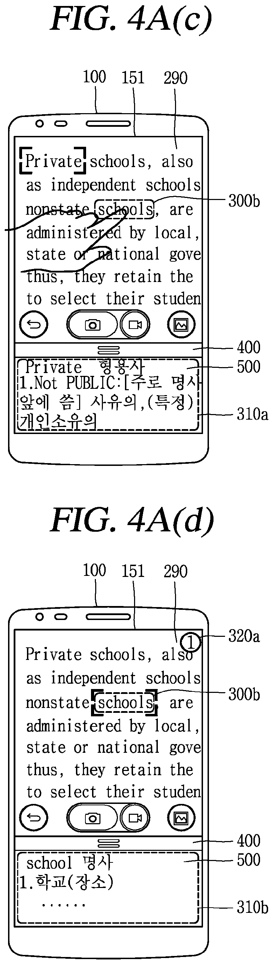

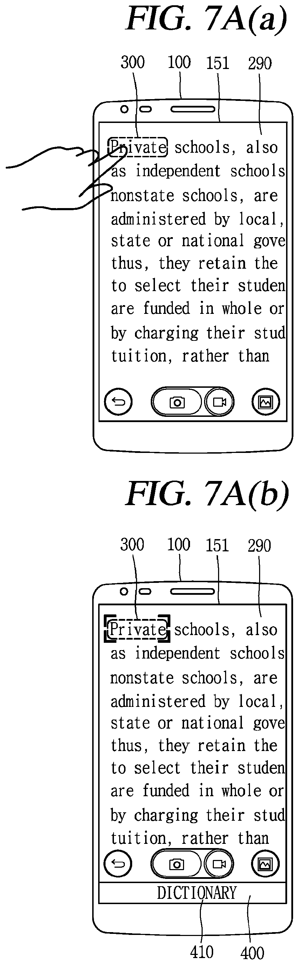

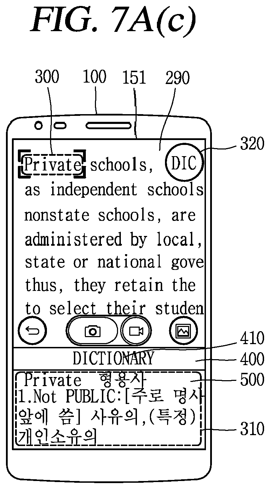

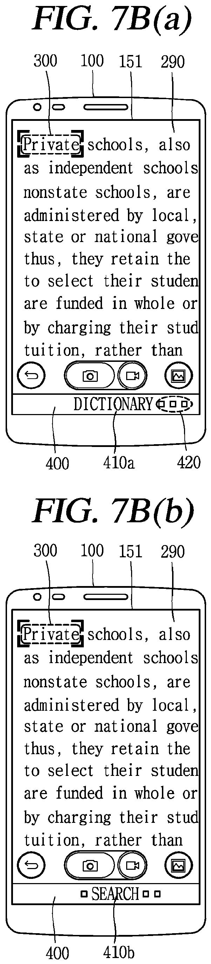

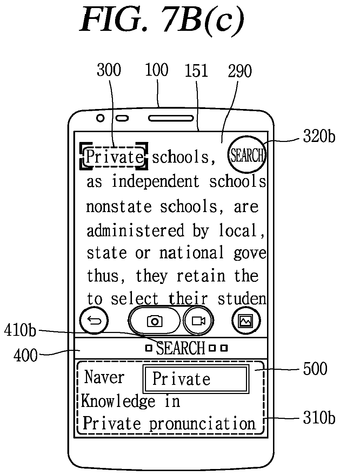

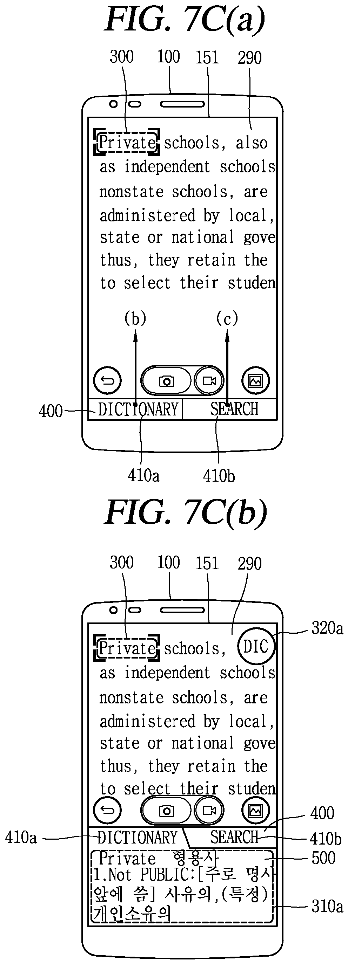

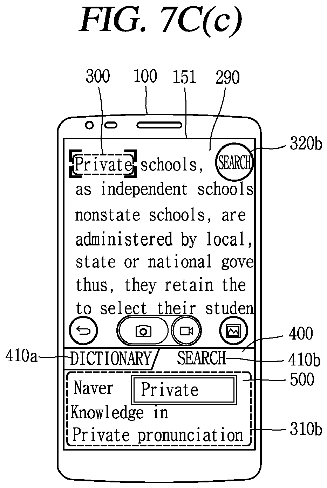

Hereinafter, various methods of displaying information associated with a graphic object to which a touch is applied when a preview image is displayed will be described in more detail with reference to the accompanying drawings. FIGS. 4A, 4B, 4C, 5A, 5B, 6A and 6B are conceptual views illustrating a method for providing information associated with a graphic object to which a touch is applied or focus is adjusted in a preview image, and FIGS. 7A, 7B and 7C are conceptual views illustrating a method of providing information associated with any one of a plurality of categories when information associated with a graphic object to which a touch is applied in a preview image includes the plurality of categories.

The controller 180 can display the preview image 290 received through a camera on the display unit 151. Then, as illustrated in FIG. 4A(a), when a touch is applied to at least one graphic object 300 (for example, private) of graphic objects contained in the preview image 290, the controller 180 can adjust the focus around the graphic object 300a to which the touch is applied.

Furthermore, as illustrated in FIG. 4A(a), the controller 180 can display the indicator 400 indicating that there is information associated with the graphic object 300a to which the touch is applied on the display unit 151. FIG. 4A(a) illustrates that the indicator 400 is displayed at one side of a region in which the preview image 290 is displayed. However, the indicator 400 is not limited to this, and displayed a different side thereof according to the location of a graphic object to which the touch is applied or the location of a graphic object to which focus is adjusted. Furthermore, the indicator 400 may be displayed in various shapes such as an image, an icon or popup menu shape as well as a bar shape.

When a preset type of touch is applied to the indicator 400 when the preview image 290 is displayed, the controller 180 can control the display unit 151 to display information 310 associated with a graphic object to which the touch is applied. Specifically, the controller 180 can display information 310a associated with the graphic object 300a to which the touch is applied in one region 500 of the display unit 151 based on a preset type of touch being applied to the indicator 400.

For example, as illustrated in FIG. 4A(b), the controller 180 can display the associated information 310 in one region 500 of the display unit 151 based on a drag touch being applied to the indicator 400 displayed at one side of the display unit 151. Here, the size of the one region 500 may vary based on a drag touch being applied to the indicator 400. Furthermore, the display of part of the preview image 290 may be limited by the size corresponding to the one region 500 since the one region 500 overlaps with the preview image 290. When a drag touch started from the indicator 400 is extended from one side to the other side, and the one region 500 overlaps with the entire region in which the preview image 290 is displayed, the display of the preview image 290 may be limited. In addition, the controller 180 can set the background of the one region 500 to be transparent to display the preview image 290. Moreover, the controller 180 can change the display location of associated information to display the associated information in the one region 500 around a graphic object to which the touch is applied (or focus is adjusted).

When the size of the one region 500 is reduced according to a drag touch being applied again to the indicator 400 located at the other side, the background of the one region 500 may be restored prior to being transparent. Specifically, when a drag touch is applied to the indicator 400 when the one region 500 is set to the entire region of the display unit 151, the controller 180 can reduce the size of the one region 500. Furthermore, when the size of the one region 500 is reduced (when the one region 500 does not overlap with the entire region in which the preview image 290 is displayed), the controller 180 can restore the background of the one region 500 to a state prior to being transparent, and restore the display location of the associated information to a state prior to being changed.

Further, as illustrated in FIG. 4A(c), a touch may be applied to a graphic object 300b (for example, schools) different from a graphic object 300a to which the touch is applied among graphic objects contained in the preview image 290 when the associated information 310a is displayed. In this instance, the controller 180 can adjust the focus around the different graphic object 300b to which the touch is applied. Furthermore, information 310b associated with the different graphic object 300b may be displayed on the display unit 151. Here, it is assumed that information 310a associated with the graphic object 300a is first information, and information 310b associated with the different graphic object 300b is second information, for example. When a touch is applied to the different graphic object 300b when the first information 310a is displayed in the one region 500, the controller 180 can display the second information 310b associated with the different graphic object 300b instead of the first information 310a displayed in the one region 500.

Moreover, as illustrated in FIG. 4A(d), when a touch is applied to the different graphic object 300b and information 310b is displayed, the controller 180 can display an icon 320a linked with a display function of the information 310a associated with the graphic object. Furthermore, when a touch is applied the different graphic object 300b, the controller 180 can maintain the display of an outline displayed around the graphic object 300a to which a touch is previously applied. Here, when a touch is applied or focus is automatically adjusted to any one of graphic objects contained in the preview image 290, the outline may be displayed around a graphic object to which the touch is applied (or focus is adjusted). The outline performs the role of guiding to identify a graphic object to which the touch is applied or focus is adjusted on the preview image 290. When a touch is applied to a plurality of graphic objects contained in the preview image 290, the controller 180 can display the outline for each graphic object to which the touch is applied.

The outline may be displayed depending on a graphic object to which the touch is applied (or focus is adjusted). Specifically, when a body provided with the camera moves, the preview image 290 displayed on the display unit 151 may be changed, and accordingly, a graphic object contained in the preview image 290 may move or disappear. In addition, when the graphic object moves, the outline may move at the same time, depending on the movement of the graphic object. When a touch is applied to the outline or a graphic object corresponding to the outline disappears from the preview image 290, the outline may disappear.

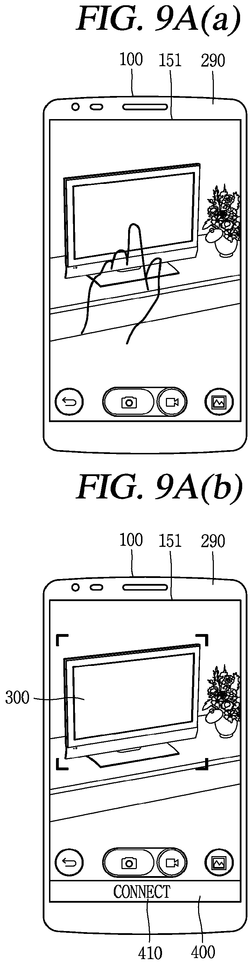

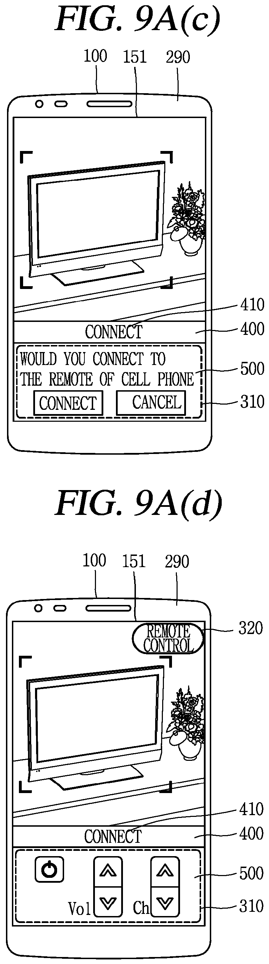

An icon 320a linked with a display function may perform the role of storing (linking) information 310 associated with a graphic object 300 to which a touch is applied, and displaying the stored associated information 310 on the display unit 151 based on a user request. Furthermore, the icon 320a linked with a display function may be moved or deleted based on a preset type of touch. The controller 180 can perform various functions based on the movement of the icon 320a linked with the display function. For example, the controller 180 can display information 310 associated with storage on the icon 320a or perform data transmission between devices capable of communication (a method of transmitting data between devices capable of communication will be described below in more detail with reference to FIGS. 9A through 9C).

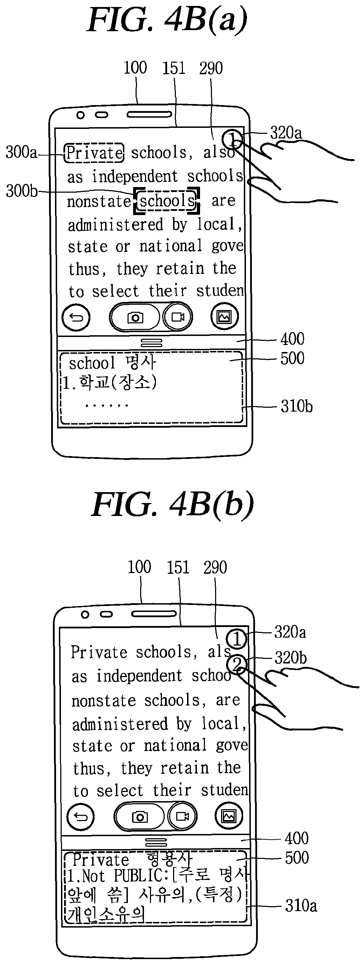

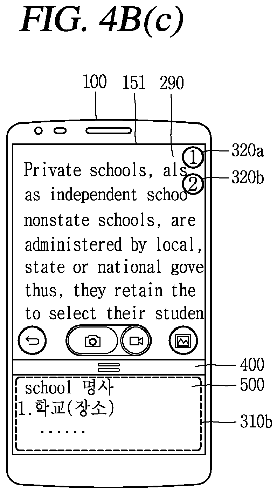

A method of displaying associated information using an icon associated with a display function will be described in more detail with reference to FIG. 4B. When a touch is applied to the icon 320a linked with the display function of first information 310a and when second information 310b is displayed as illustrated in FIG. 4B(a), the controller 180 can display the first information 310a instead of the second information 310b in one region 500 of the display unit 151 as illustrated in FIG. 4B(b). In addition, the color of the icon 320a linked with a display function may be the same as the color of an outline displayed around the graphic object 300a to which the touch is applied (or focus is adjusted). Thus, the user can more easily understand that an icon associated with the display function is relevant to which graphic object.

Furthermore, when a previous graphic object 300a disappears from the preview image, the icon 320a linked with a display function of the first information 310a associated with the previous graphic object 300a may disappear or remain as it is. Furthermore, the controller 180 can display an icon 320b linked with a display function of the second information 310b that has been displayed in the one region 500 based on a touch being applied to the icon 320a linked with a display function of the first information 310a. For example, when an icon linked with the display function of the first information 310a is a first icon 320a, the controller 180 can display a second icon 320b linked with the display function of the second information 310b different from the first icon 320a based on a touch being applied to the first icon 320a.

Then, when a touch is applied to the second icon 320b as illustrated in FIG. 4B(b), the controller 180 can display the second information 310b linked (stored) with the second icon 320b in one region 500 of the display unit 151 as illustrated in FIG. 4B(c). Further, it has been described in FIGS. 4A and 4B that an icon 320 (e.g., icon 320a and/or 320b) linked with a display function is displayed based on a different graphic object 320 being selected (FIG. 4A(c)) or a touch being applied to a previously displayed icon (FIG. 4B(a)) when information associated with a graphic object to which the touch is applied is displayed. However, it is not limited to this, and the icon 320 can be displayed in various ways. For example, when a touch is applied to the graphic object 300 in FIG. 4A(a), the icon 320 associated with a display function of the graphic object may be displayed along with the indicator 400 or displayed based on a preset type of touch (for example, drag touch) being applied to the indicator 400 in the step of FIG. 4A(b). Furthermore, information associated with the graphic object may be understood to include an icon linked with a display function.

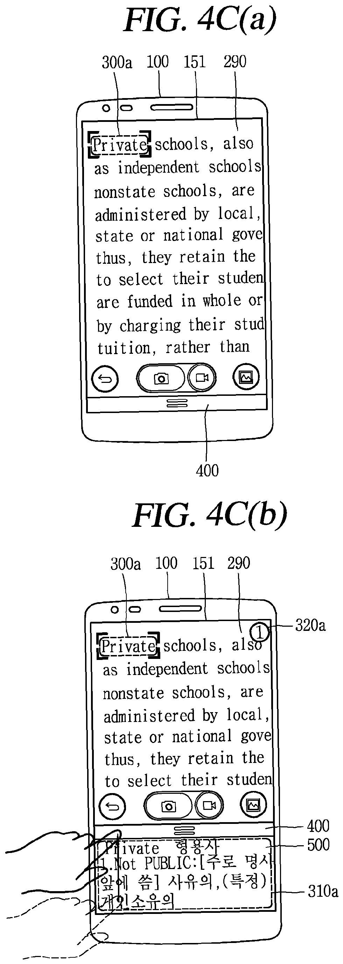

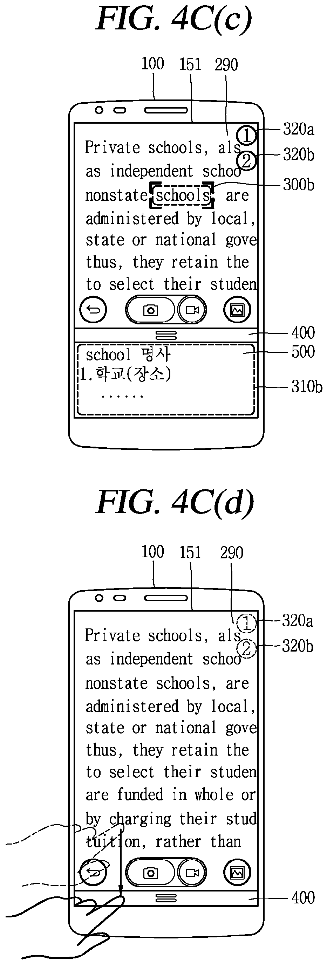

For example, as a touch is applied to at least one graphic object 300a of graphic objects contained in the preview image 290, the indicator 400 indicating that information 310a associated with the graphic object 300a to which the touch is applied is displayed information FIG. 4C(a). Then, the controller 180 can display information 310a associated with a graphic object to which the touch is applied based on a preset type of touch being applied to the indicator 400. Furthermore, as illustrated in FIG. 4C(b), the controller 180 can display an icon 320a (first icon) linked with a display function of the information 310a associated with a graphic object to which the touch is applied based on a preset type of touch being applied to the indicator 400.

Furthermore, as illustrated in FIG. 4C(c), when a touch is applied to a graphic object 300b different from the graphic object 300a to which a touch has been previously applied, the controller 180 can display information 310b associated with the different graphic object, and display an icon 320b (second icon) linked with a display function of the information 310b associated with the different graphic object.

Then, as illustrated in FIG. 4C(d), when one region 500 disappears based on a preset type of touch being applied to the indicator 400, the controller 180 can restrict the display of the first and the second icon 320a, 320b. Here, a preset type of touch for allowing the one region to disappear may include a drag touch started from the indicator, a double touch applied to the indicator, a touch to a region that is not recognized as a graphic object in the preview image, and the like.

Then, the indicator 400 may disappear based on the passage of a preset period of time. Here, when a preset type of touch is applied to the indicator 400 to display associated information in one region 500 of the display unit 151 prior to the passage of a preset period of time, the controller 180 can display again the first and the second icon 320a, 320b.

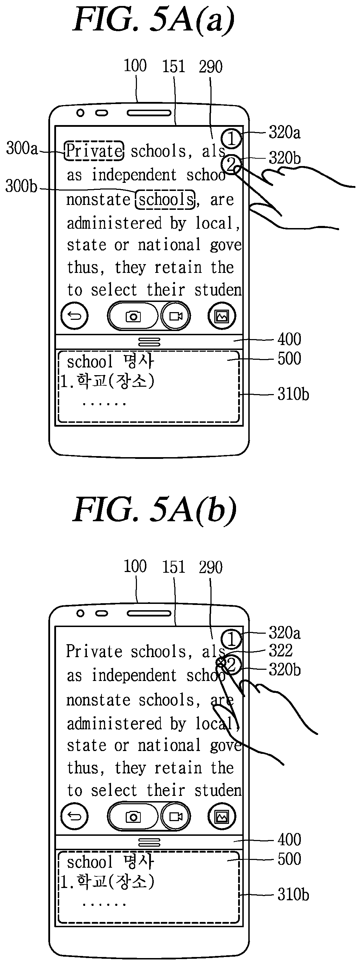

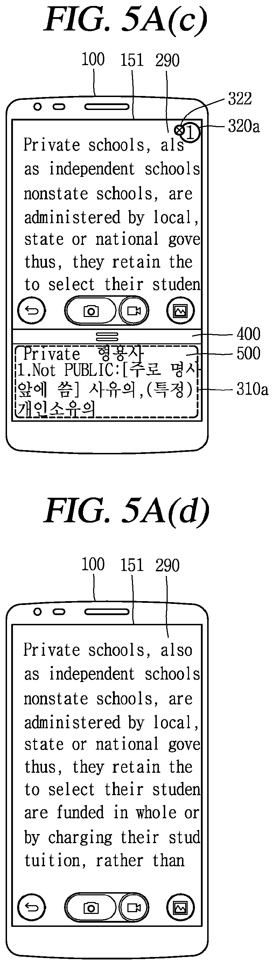

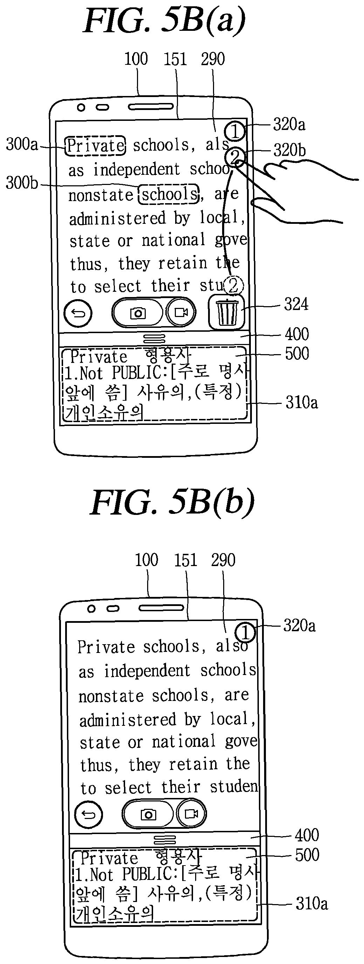

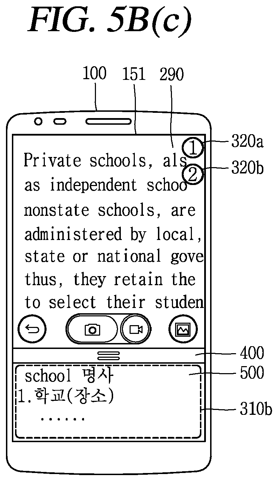

Referring to FIGS. 5A and 5B, a method of applying a preset type of touch to an icon for using associated information to display the associated information will be described in more detail. As illustrated in FIG. 5A(a), a preview image 290, either one information 310b of information 310a, 310b associated with graphic objects 300a, 300b to which a touch is applied, and an icon 320a, 320b linked with a display function of the associated information 310a, 310b are displayed on the display unit 151. Here, the controller 180 can display an icon 322 for deleting the icon 320b to which the touch is applied to overlap with the icon 320b to which the touch is applied as illustrated in FIG. 5A(b) based on a preset type of touch being applied to the icon 320b linked with the display function as illustrated in FIG. 5A(a). For example, the preset type of touch may include a long touch, a double touch, and the like. Meanwhile, when a swipe touch is applied to the icon 320a, 320b linked with the display function, the controller 180 can delete the icon 320a, 320b even without additionally displaying the icon 322 for deletion.

In other words, when a touch is applied to the icon 322 for deletion, the controller 180 can delete the icon 320b as illustrated in FIG. 5A(b). In addition, when a touch is applied to the icon 322 for deletion when information 310b is displayed, information 310a associated with a different graphic object may be displayed in one region 500 of the display unit 151.

Furthermore, as illustrated in FIG. 5A(c), when a touch is applied to the icon 322 for deletion when the icon 322 overlaps with the icon 320a linked with the display function using the foregoing method of FIGS. 5A(a) and 5A(b), the controller 180 can delete the icon 320a . Furthermore, the controller 180 can restrict the display of associated information 310a displayed in one region 500 of the display unit 151 based on the deletion of the icon 320a for using the associated information. Here, when there is no associated information to be displayed in one region 500 of the display unit 151, the controller 180 can restrict the display of the one region 500 and the indicator 400.

A method of deleting the icon 320 or displaying information 310 linked with the icon 320 using a method different from the foregoing method of FIG. 5A is illustrated in FIG. 5B. As illustrated in FIG. 5B(a), the controller 180 can display an icon 324 for performing a delete function based on a touch being applied to either one icon 320b of the icons 320a, 320b linked with the display function of information, and a drag touch extended from the touch being applied. Then, when the drag touch is released (terminated) from the icon 324 for performing the delete function, the controller 180 can delete the icon 320b to which the drag touch is applied as illustrated in FIG. 5B(b).

Next, when the drag touch is released from at least one of the indicator 400 and one region 500 of the display unit 151, the controller 180 can display information 310b linked with the either one icon 320b to which the drag touch is applied in the one region 500 as illustrated in FIG. 5B(c). Further, even though a touch is applied to two graphic object in FIGS. 4A through 5B, it is not limited to this, and the foregoing description may be also applicable in the same or similar manner with no restriction of the number of graphic objects to which a touch is applied.

Further, a method of processing a word to which a touch is applied as one graphic object when the touch is applied to any one word of text when a graphic object contained in the preview image is text has been described as an example in FIGS. 4A through 5B.

Hereinafter, a method of selecting (recognizing) any one graphic through a different scheme when a graphic object contained in the preview image is text will be described in more detail with reference to the accompanying drawings. The controller 180 can recognize a graphic object through various touch schemes. For example, as illustrated in FIGS. 4A through 5B, when a touch is applied to any one word of text contained in the preview image 290, the controller 180 can select the word to which the touch is applied as one graphic object.

In another example, when a graphic object contained in the preview image 290 is text, the controller 180 can select at least part of the text as a graphic object 300 based on the trajectory of a drag touch applied to the text. Even though a graphic object contained in the preview image 290 is not text, when a drag touch is applied to the graphic object contained in the preview image 290, the controller 180 can select at least one graphic object overlapping with the trajectory of the drag touch.

As illustrated in FIG. 6A(a), when a drag touch is applied to text contained in the preview image 290, the controller 180 can select at least part of text based on the trajectory of the drag touch applied to the text. Here, the at least part of the text 300 may be selected (determined) in the unit of sentence (for example, "He didn't know that she was upset.") including text (for example, "He didn't know that") overlapping with the trajectory of the drag touch as illustrated in FIG. 6A(b).

Furthermore, the at least part of the text 300 may be determined only with text (for example, "He didn't know that") overlapping with the trajectory of the drag touch. In other words, whether the graphic object is determined only with text overlapping with the trajectory of the drag touch or determined with a sentence including the overlapped text may follow user setting or be determined under the control of the controller.

Then, as illustrated in FIG. 6A(b), when a graphic object 300 contained in the preview image 290 is selected, the controller 180 can display the indicator 400 indicating that there is information associated with the selected graphic object bezel 300. When a preset type of touch is applied to the indicator 400 as illustrated in FIG. 6A(b), the controller 180 can display information 310 associated with the selected graphic object on the display unit 151 as illustrated in FIG. 6A(c). Here, when the selected graphic object 300 is a sentence, the associated information 310 may be translation information for the sentence.

FIG. 6B illustrates another example in which at least part of text is selected as a graphic object based on the trajectory of a drag touch. The controller 180 can select at least part of text as a graphic object 300 based on the trajectory of a drag touch applied to the text. For example, as illustrated in FIG. 6B(a), when the trajectory of the drag touch overlaps with "He" and "How" in text, at least part of text 300 selected as a graphic object may be a sentence including the "He" and "How" (for example, "He didn't know that she was upset." and "How come?").

In another example, as illustrated in FIG. 6B(b), when the trajectory of a drag touch applied to text forms a closed loop, at least part of text 300 selected as a graphic object may be a sentence including text overlapping with at least one of the closed loop and a region formed by the closed loop.

Then, when at least part of text 300 is selected from a graphic object contained in the preview image 290, the indicator 400 indicating that there is information associated with the at least part of text 300. A method of displaying associated information using the indicator 400 will be substituted by the earlier description of FIGS. 4A through 6C.

As described above, when a touch is applied to at least one of graphic object contained in the preview image, one embodiment of the present invention displays information associated with the at least one graphic object to which the touch is applied. Furthermore, one embodiment of the present invention can display an icon linked with a display function of information associated with a graphic object, and display associated information through the icon or delete the icon. Accordingly, an embodiment of the present invention can display a plurality of associated information according to a user request without displaying only one associated information, thereby providing an optimal user interface for providing associated information.

Hereinafter, a method of displaying associated information when the information associated with a graphic object to which a touch is applied includes at least one category will be described in more detail with reference to the accompanying drawings. FIGS. 7A, 7B and 7C are conceptual views illustrating a method of providing information associated with any one of a plurality of categories when information associated with a graphic object to which a touch is applied in a preview image includes the plurality of categories.

First, as illustrated in FIG. 7A(a), when a touch is applied to at least one graphic object 300 of graphic objects contained in the preview image 290, the controller 180 can display the indicator 400 indicating that there is information associated with the graphic 300 object to which the touch is applied. Here, the controller 180 can display category information 410 corresponding to information 310 associated with the graphic object 300 to which the touch is applied on the indicator 400 as shown in FIG. 7A(b). The category information 410 performs the role of notifying that the information 310 associated with the graphic object belongs to which type. In other words, the category information 410 may be a word representing information associated with a graphic object to which the touch is applied. The category information 410 may be linked with the information 310 associated with the graphic object.

The category information 410 may be displayed on the indicator 400 through various schemes. For example, when the indicator 400 is displayed, the category information 410 may be automatically displayed on the indicator 400. In another example, the category information 410 may be displayed on the indicator 400 based on a touch being applied to the indicator 400. Furthermore, the controller 180 displays the category information 410 on the indicator 400 when a touch is applied to the indicator 400, and display associated information 310 corresponding to the category information 410 displayed on the indicator 400 in one region 500 of the display unit 151 when a drag touch extended from a touch applied to the indicator 400 is applied.

Then, when a preset type of touch is applied to the indicator 400, the controller 180 can display information 310 associated with a graphic object to which the touch is applied (or focus is adjusted) on the display unit 151. Here, the information 310 associated with a graphic object to which the touch is applied may information corresponding to the category information 410 displayed on the indicator 400.

In another example, the information 310 associated with a graphic object to which the touch is applied may be displayed in one region 500 of the display unit 151 based on a preset type of touch (for example, a long touch, a double touch, a drag touch) being applied to the indicator 400 subsequent to displaying the category information 410 on the indicator 400.

Furthermore, the controller 180 can display an icon 320 for using the associated information based on the display of the information 310 associated with a graphic object to which the touch is applied as shown in FIG. 7A(c). The category information 410 may be displayed on the icon 320. Further, the information 310 associated with a graphic object to which the touch is applied may include a plurality of categories. Specifically, a plurality of associated information corresponding to a plurality of categories may be linked with any one graphic object to which the touch is applied. In this instance, any one of a plurality of categories may be displayed on the indicator 400 as illustrated in FIG. 7B(b). Furthermore, as shown in FIG. 7B(a), an icon 420 indicating that a graphic object to which a touch is applied is linked with a plurality of associated information corresponding to a plurality of categories may be displayed on the indicator 400.

Then, the controller 180 can change category information 410a displayed on the indicator 400 to another category in 410b based on a preset type of touch being applied to the indicator 400. The preset type of touch may include a short touch, a swipe touch, and the like applied to the indicator 400.

In other words, when a preset type of touch is applied to the indicator 400, the controller 180 can allow any one category information 410a displayed on the indicator 400 to be shown or change it to another category information 410b as illustrated in FIG. 7B(b). Then, when a preset type of touch is applied to the indicator 400, the controller 180 can display information 310b corresponding to category information 410b displayed on the indicator 400 in one region 500 of the display unit 151 as illustrated in FIG. 7B(c).

In another example, when associated information corresponding to a plurality of categories is linked with the graphic object 300 to which the touch is applied among graphic objects contained in the preview image 290, a plurality of category information 410a, 410b may be displayed at the same time on the indicator 400 as illustrated in FIG. 7C(a). Then, when a preset type of touch is applied to any one of a plurality of category information displayed on the indicator 400, the controller 180 can display associated information corresponding to any one to which the touch is applied on the display unit.

For example, when a drag touch started from the first category information 410a (for example, dictionary) among a plurality of category information displayed on the indicator 400 is applied, the controller 180 can display associated information 310a corresponding to first category information 410a on the display unit 151 as illustrated in FIG. 7C(b). Furthermore, the controller 180 can display an icon 320a linked with a display function of the information 310a and display the first category information 410a on the icon 320a based on a drag touch started from the indicator 400 (first category information 410a) being applied.

In another example, when a drag touch started from the second category information 410b (for example, search) among a plurality of category information displayed on the indicator 400 is applied, the controller 180 can display associated information 310b corresponding to second category information 410b in one region 500 of the display unit 151 as illustrated in FIG. 7C(c). Furthermore, the controller 180 can display an icon 320b linked with a display function of the information 310b and display the second category information 410b on the icon 320b based on a drag touch started from the indicator 400 (second category information 410b) being applied.

Further, the category information 410 may be displayed on one region 500 of the display unit 151 in which associated information 320 is displayed as well as displayed on the indicator 400. Further, according to an embodiment of the present invention, the preview image 290 displayed on the display unit 151 may be changed as moving the body provided with a camera. A graphic object 300 to which a touch is applied or a graphic object to which focus is adjusted may disappear according to the change of the preview image 290. In addition, the display of the associated information 310 that has been displayed may be maintained or notification information for notifying the necessity of selecting a new graphic object may be displayed in one region 500 of the display unit 151. When an automatic focus adjustment function is performed to adjust the focus to a new graphic object in the changed preview image 290, information associated with a new graphic object may be displayed in one region 500 of the display unit 151.

In another example, when a graphic object to which the touch is applied (or focus is adjusted) disappears according to a change of the preview image 290, the indicator 400, associated information 310 and one region 500 of the display unit 151 may disappear. Here, if the icon 320 linked with a display function of the associated information 310 is displayed, then the display of the icon 320 may be maintained as it is or disappear at the same time according to the disappearance of the indicator 400.

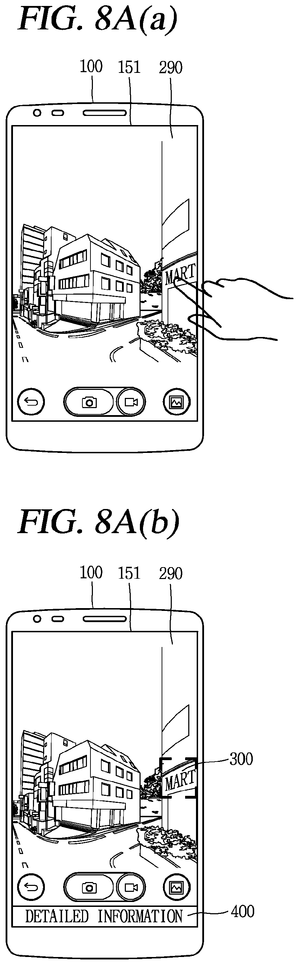

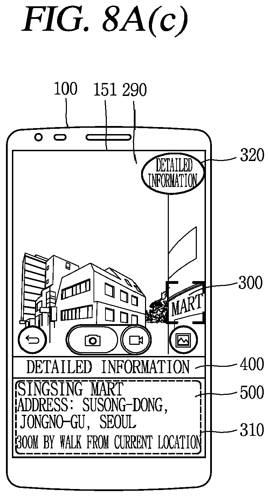

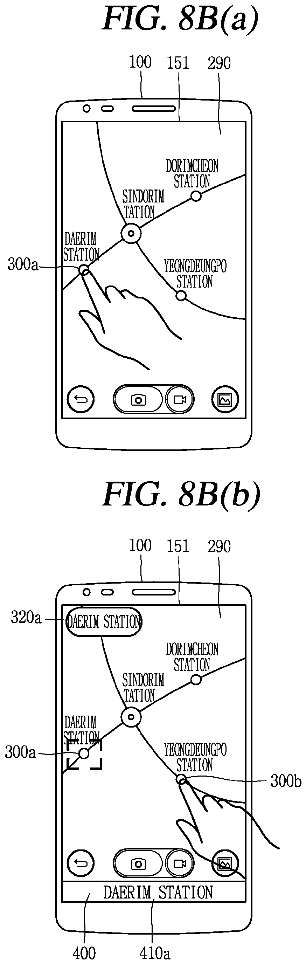

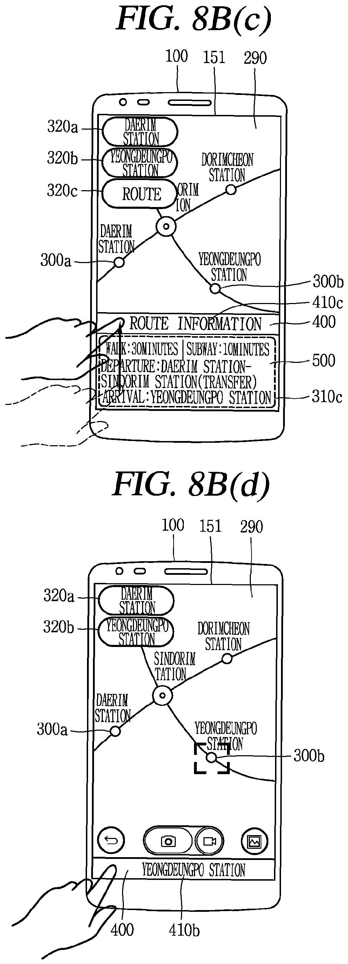

Hereinafter, a method of providing information associated with a graphic object to which the touch is applied using an application associated with the graphic object to which the touch is applied among graphic objects contained in the preview image will be described in more detail with reference to the accompanying drawings. FIGS. 8A and 8B are conceptual views illustrating a method of determining an application associated with a graphic object to which a touch is applied in a preview image, and providing information associated with the graphic object using the application.

As illustrated in FIG. 8A(a), the preview image 290 may include at least one graphic object. Here, when a touch is applied to any one graphic object 300320, the controller 180 can adjust the focus around the graphic object 300 to which the touch is applied. Furthermore, as illustrated in FIG. 8A(b), the controller 180 can display the indicator 400 indicating that there is information associated with the graphic object 300 to which the touch is applied. Furthermore, when the touched graphic object 300 is determined as a sign including a building, a place name, a street name, and the like or a terrain capable of determining a place, the controller 180 can determine an associative application based on the determination result. For example, when the touched graphic object 300 is determined as a building or place name, the controller 180 can determine a map-related application as an application associated with the graphic object to which the touch is applied. Here, the map-related application may provide detailed information including place information, path information between a current location and a specific place, and the like.

The controller 180 can determine an associated application based on the touched graphic object 300, and provide information provided from the determined application as the information 310 associated with a graphic object to which the touch is applied. In other words, information provided from the application may be an execution screen of the associative application. Specifically, when a preset type of touch is applied to the indicator 400, the controller 180 can display an execution screen of the determined application on the display unit 151.

In this instance, the execution screen of the application may be displayed in one region of the display unit 151, and the size of the execution screen of the application may be changed based on a drag touch extended from the touch applied to the indicator 400. Specifically, the size of the one region 500 of the display unit 151 may be changed based on a drag touch extended from the touch applied to the indicator 400. Furthermore, the execution screen of the application may be displayed in one region 500 of the display unit 151. Accordingly, the size of the execution screen of the application may be changed based on a drag touch extended from the touch applied to the indicator 400.

In another example, the controller 180 can display an execution screen of the application in one region 500 of the display unit 151 based on a preset type of touch (for example, a long touch or double touch) being applied to the indicator 400. In addition, when a long touch or double touch is applied to the indicator 400, the controller 180 can set the one region 500 to have a preset size, and display an execution screen of the application in the one region 500.

Furthermore, when the size of one region 500 set by a drag touch started from the indicator 400 is less than a preset size, the controller 180 can extend the size of the one region 500 set by the drag touch to the preset size. The category information 410 indicating that there is detailed information provided from an associative application may be displayed on the indicator 400 as illustrated in FIG. 8A(b).

For example, when the indicator 400 is displayed, the category information 410 may be automatically displayed on the indicator 400. Furthermore, the indicator 400 may be displayed based on a touch being applied to the indicator 400. Here, the category information 410 may be a representative keyword, an associative application name, and the like.

Then, as illustrated in FIG. 8A(c), the controller 180 can display an execution screen (associated information 310) corresponding to the category information 410 in one region 500 of the display unit 151 based on a preset type of touch being applied to the indicator 400. The icon 320 can also be displayed as shown in FIG. 8A(c). Further, as illustrated in FIG. 8B(a), a map-related image may be displayed on the preview image 290. In this instance, the controller 180 can determine an associative application based on at least one of the preview image 290, a graphic object 300 to which a touch is applied in the preview image, and a graphic object 300 to which focus is automatically applied with no touch.

For example, FIG. 8B(a) illustrates that an image corresponding to a subway map is displayed as the preview image 290, and a touch is applied to a region corresponding to a subway station among graphic objects contained in the preview image 290. In this instance, the controller 180 can determine an associative application (for example, map-related application) based on the preview image 290 and a graphic object 300a to which the touch is applied.

Then, the controller 180 can display the indicator 400 indicating that there is information associated with the graphic object 300a to which the touch is applied (or focus is automatically adjusted) on the display unit. Furthermore, the controller 180 can display category information 410a corresponding to information associated with the indicator 400. Moreover, the controller 180 can display the category information 410a on an icon 320a linked with a display function of the associated information as shown in FIG. 8B(b).

Then, when a touch is applied to a graphic object 300b different from the graphic object 300a to which the touch is applied as illustrated in FIG. 8B(b), the controller 180 can display category information 410b corresponding to information associated with the different graphic object 300b on the indicator 400 as illustrated in FIG. 8B(d). Here, when it is determined that there are two or more graphic objects to which the touch is applied on the preview image 290, the associative application may provide different information using information 310a, 310b associated with a graphic object to which the touch is applied. For example, when the associative application is a map-related application, and a graphic object to which the touch is applied is a graphic object related to at least two or more places, the associative application may provide path information using the graphic object associated with the at least two or more places as shown in FIG. 8B(c).

The controller 180 can display category information 410c indicating that there is the path information on the indicator 400 based on a preset type of touch (for example, a short touch or swipe touch) for changing category information displayed on the indicator 400 as illustrated in FIG. 8B(c). Then, when a preset type of touch (for example, drag touch) is applied to the indicator 400 displayed with category information 410c corresponding to path information, the controller 180 can display the execution screen 310c of an application corresponding to the category information 410c on the display unit 151. Path information extracted using information 310a, 310b associated with at least two graphic objects to which a touch is applied on the preview image 290 may be displayed on the execution screen 310c of the application. Furthermore, the controller 180 can display an icon 320c linked with a display function of the execution screen 310c of the application based on the execution screen 310c of the application being displayed on the display unit 151.

As described above, one embodiment of the present invention can determine an associative application based on at least one of a preview image and a graphic object to which a touch is applied, and display an execution screen of the determined application as associated information. Accordingly, a user can drive the application through the execution screen of an associative application while at the same time performing an image capture function, and obtain information provided from the application, thereby enhancing convenience.

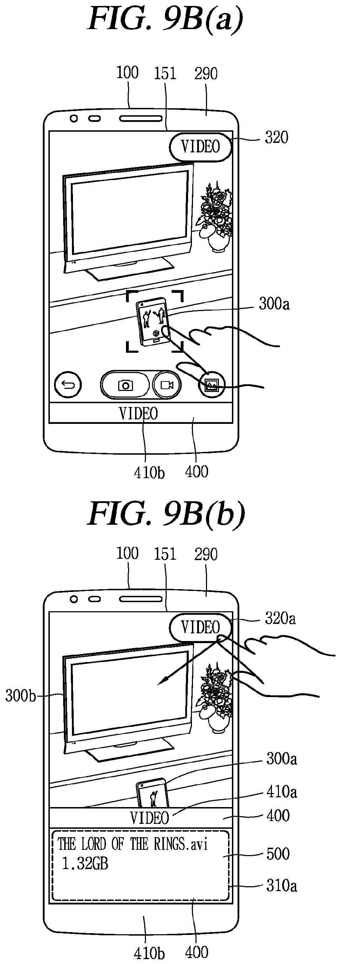

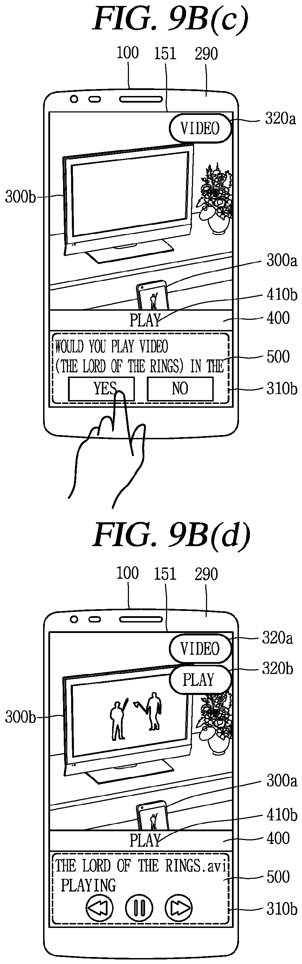

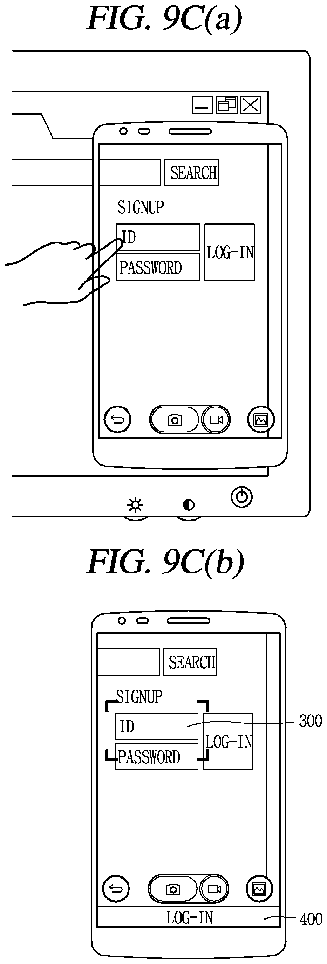

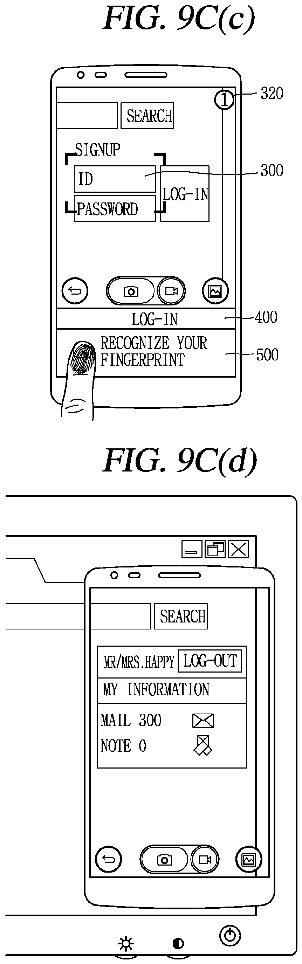

Hereinafter, a method of performing communication with a device using device-related information when a graphic object to which a touch is applied (or focus is automatically adjusted) is a device capable of communication will be described in more detail with reference to the accompanying drawings. FIGS. 9A, 9B and 9C are conceptual views illustrating a method of performing communication with a device when a subject corresponding to a graphic object to which a touch is applied in a preview image is the device capable of communication.

First, the mobile terminal 100 according to an embodiment of the present invention may include the wireless communication unit 110 performing wireless communication with at least one external device. The controller 180 can determine that a touch is applied to at least one of graphic object contained in a preview image, and a subject corresponding to the graphic object to which the touch is applied is a device capable of communication with the wireless communication unit 110. For example, whether or not it is a device capable of communication can be determined based on a shape recognized as a graphic object to which the touch is applied, a communication history with the wireless communication unit 110, whether or not there is a response of the subject for a signal transmitted from the wireless communication unit 110, and the like.

When a touch is applied to at least one of graphic objects contained in the preview image 290 as illustrated in FIG. 9A(a), the controller 180 can adjust the focus around the graphic object 300 to which the touch is applied. Furthermore, as illustrated in FIG. 9A(b), the controller 180 can display the indicator 400 indicating that there is information associated with the graphic object 300 to which the touch is applied.

When a subject corresponding to the graphic object 300 to which the touch is applied is a device capable of communication, information 310 associated with the graphic object to which the touch is applied may include detailed information of the device 300, information required to perform a communication function with the device 300, information associated with an image when the image is being reproduced on the device, and information for selecting whether or not to perform wireless communication with the device, and the like.

For example, the controller 180 can display category information 410 notifying that there is information associated with a device on the indicator 400 as illustrated in FIG. 9A(b). For example, the communication function may be a remote control function. Furthermore, the information associated with a device may be information for selecting whether or not to perform wireless communication with the device 300.

Then, the controller 180 can display information for selecting whether or not to perform wireless communication with the device 300 based on a preset type of touch being applied to the indicator 400 as illustrated in FIG. 9A(c). Then, when a communication function (for example, remote control function) is performed based on a user's selection, the controller 180 can display icons 310 associated with a communication function (for example, remote control function) in one region 500 of the display unit 151 as illustrated in FIG. 9A(d).

Further, when an image is displayed (reproduced) from a device 300a capable of communication, the controller 180 can receive information associated with the image from the device 300a through the wireless communication unit 110. Here, the information associated with the image may include an image displayed on the device 300a capable of communication, detailed information associated with the image, an icon linked with a display function of the image, and the like.

The controller 180 can display an image displayed on the device capable of communication on a device 300b different from the device 300a. Specifically, when a graphic object 300a to which a touch is applied in the preview image is a device capable of communication, and an image is displayed on the device 300a, the controller 180 can perform a communication function (or communication connection) with the device 300a to receive the displayed image.

Then, the controller 180 can display the indicator 400 indicating that there is information associated with an image on the graphic object 300a to which the touch is applied. Furthermore, the controller 180 can display information 310a associated with the image based on a preset type of touch being applied to the indicator 400. Furthermore, the controller 180 can display an icon 320a linked with a display function of the image based on a preset type of touch (drag touch) being applied to the indicator 400. In another example, the controller 180 can display the icon 320a based on a preset type of touch (for example, a short touch, a long touch, a double touch, a swipe touch, etc.) different from the preset type of touch on the indicator 400.

For example, when an image displayed from a device capable of communication corresponding to the graphic object 300a to which the touch is applied is a video, the controller 180 can receive the video from the device, and display the indicator 400 indicating that there is information associated with the video as illustrated in FIG. 9B(a). Furthermore, the controller 180 can display an icon 320a linked with a display function of the video.

Furthermore, the controller 180 can display information 310 associated with the image based on a preset type of touch being applied to the indicator 400 as illustrated in FIG. 9B(b). Then, when a preset type of touch is applied to a graphic object 300b corresponding to a device different from the device 300a capable of communication among graphic objects contained in the preview image, the controller 180 can perform a communication function with the different device 300b to display the image on the different device 300b.

The preset type of touch may be, for example, a drag touch started from the icon 320 linked with a display function of the image being released (or terminated) from the graphic object 300b corresponding to a device different from the device 300a capable of communication among graphic objects contained in the preview image 290. Here, the different device 300b is a device capable of communication. Specifically, the controller 180 can transmit an image to the different device 300b to display the image on a device 300b different from the device 300a (a device on which the image has been displayed) corresponding to a graphic object to which the touch is applied based on a preset type of touch being applied to an icon 320 for using information associated with the image.

Referring to FIG. 9B(b), a graphic object corresponding to the different device 300b may be displayed at a position from which a drag touch started from the icon 320 is terminated. In this instance, as illustrated in FIG. 9B(c), the controller 180 can display information 310b for selecting whether or not to display the image on the different device 300b in one region 500 of the display unit 151.

Then, as illustrated in FIG. 9B(d), the controller 180 can perform a communication function with the different device to display the image on the different device 310b based on a user's selection. For example, the controller 180 can transmit the image to the different device 310b to display the image on the different device 310b. Furthermore, the controller 180 can execute a remote control function (communication function) for controlling the different device 310b to control an image displayed on the different device 310b. For example, as illustrated in FIG. 9B(d), the controller 180 can display the icon 310b for controlling the different device 300b in a region 500 for displaying the associated information.

Further, when a touch is applied to the icon 320 linked with a display function of the image, the controller 180 can display the image in one region 500 of the display unit 151. When icons 320a, 320b for using associated information are deleted or a region 500 for displaying the associated information disappears according to a method described in FIGS. 4C through 5B, the controller 180 can terminate a communication function with devices capable of communication.

Further, a part of log-in screen information of payment screen information displayed on a device capable of communication may be displayed on the preview image 290. Referring to FIG. 9C(a), part of the log-in screen information displayed on a device capable of communication may be displayed on the preview image 290. Here, when a graphic object to which the touch is applied among graphic objects displayed in the preview image is determined as an object associated with the log-in process, the controller 180 can display the indicator 400 indicating that there is information associated with the graphic object 300 as shown in FIG. 9C(b).

Here, information 310 associated with a graphic object can be information for notifying that the log-in of a device capable of communication can be performed using the display unit 151. Further, a fingerprint sensor for recognizing a user's fingerprint may be provided in the display unit 151, and the controller 180 can use fingerprint information sensed through the fingerprint sensor as a certification method.

In other words, when a preset type of touch is applied to the indicator 400, the controller 180 can display a region 500 for displaying associated information. In addition, the controller 180 can activate the fingerprint sensor to recognize a user's fingerprint applied to the region 500. Furthermore, notification information 310 for guiding an input of fingerprint may be displayed in the region 500.

Then, when a user's fingerprint is recognized in the region 500, the controller 180 can transmit the recognized fingerprint information to the device capable of communication. When the received fingerprint information matches a prestored fingerprint information, the device capable of communication may perform a log in process as illustrated in FIG. 9C(d). Further, as illustrated in FIG. 9C(c), the controller 180 can display an icon 320 for using information associated with the log in. Here, the information associated with the log in may be prestored fingerprint information or information (for example, ID, password) required for log in.

Here, when a drag touch extended from a touch applied to the icon 320 is released from at least one of the region 500 for displaying associated information and the graphic object 300 to which the touch is applied, the controller 180 can transmit information required for log in to the device capable of communication to request the log in. Further, when part of the payment screen information is displayed on the preview image 290, the foregoing method of FIG. 9C may be applicable in the same or similar manner.

As described above, an embodiment of the present invention can apply a touch to a graphic object corresponding to a device capable of communication contained in a preview image when the preview image is displayed to perform communication with the device capable of communication. Accordingly, the user may more easily select his or her desired device using a preview image, and receive an optimized GUI that can be performed when the selected device and preview image are displayed.

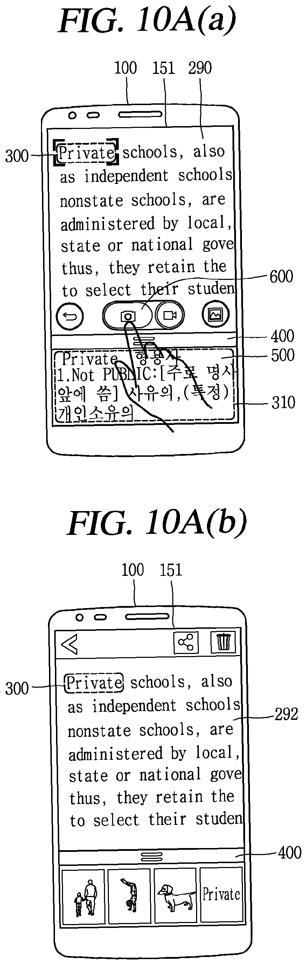

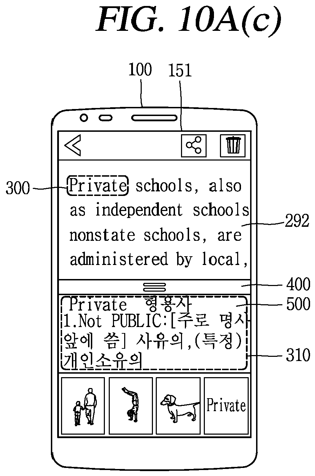

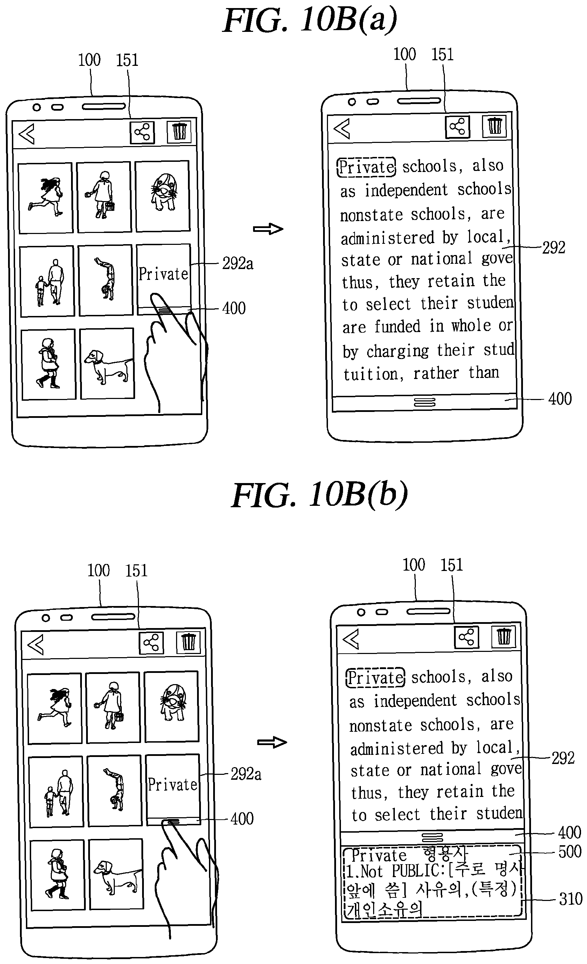

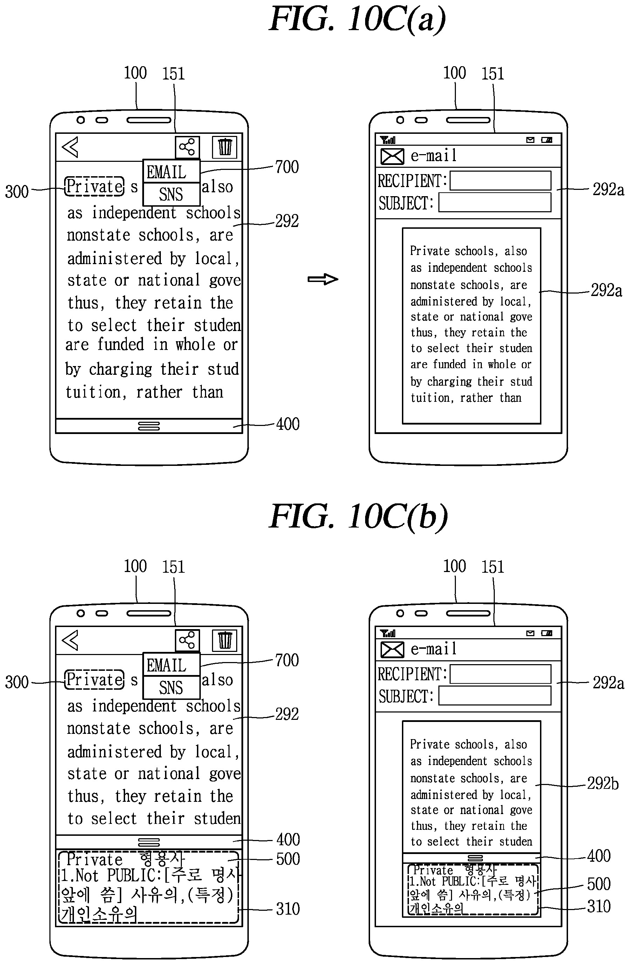

Hereinafter, a method of using an image captured when information associated with a graphic object contained in the preview image is displayed will be described in more detail with reference to the accompanying drawings. FIGS. 10A, 10B and 10C are conceptual views illustrating a method of using an image captured when information associated with a graphic object to which a touch is applied or focus is adjusted in a preview image is provided.

First, as illustrated in FIG. 10A(a), a preview image 290 and information 310 associated with the graphic object 300 to which the touch is applied to the preview image are displayed on the display unit 151. Here, the controller 180 can capture an image capture operation based on a touch being applied to an icon 600 linked with an image capture function. In this instance, the controller 180 can store at least one of an original image 292 for the preview image 290 and data linked with the original image and the associated information 310 in the memory 170.

For example, as illustrated in FIG. 10A(b), a file linked with the information 310 associated with the original image stored in the memory 170 may displayed on the display unit 151. When the linked file is displayed, the original image 292 and the indicator 400 indicating that there is associated information may be displayed on the display unit 151. The controller 180 can display the associated information 310 that has been displayed during image capture based on a preset type of touch being applied to the indicator 400 as shown in FIG. 10A(c).

Further, thumbnails for images stored in the memory unit may be displayed on the display unit 151 as illustrated in FIG. 10B. Here, as illustrated in FIG. 10A(a), when a capture function is performed when associated information is displayed, the controller 180 can store a file linked with the original image 292 and associated information 310 in the memory 170. A thumbnail for a file linked with the original image 292 and associated information 310 may be displayed in a shape in which a thumbnail 292a for the original image 292 and the indicator 400 indicating that there is associated information are overlapped with each other as illustrated in FIG. 10B.

When a touch is applied to the thumbnail 292a for the original image as illustrated in FIG. 10B(a), the controller 180 can display the original image 292 in an enlarged manner, and display the indicator 400 indicating that there is associated information at one side of the display unit. In this state, when a preset type of touch is applied to the indicator 400, information associated with the original image 292 may be displayed in one region 500 of the display unit 151 as described above.

In another example, when a touch is applied to the indicator 400 overlapping with the thumbnail 292a for the original image as illustrated in FIG. 10B(b), the controller 180 can immediately display associated information 310 linked with the original image in one region 500 of the display unit 151 while at the same time displaying the original image 292 in an enlarged manner.

Further, the controller 180 can transmit (share) a file linked with the original image and associated information 310 based on a user request. Specifically, the controller 180 can transmit the file based on the selection of a button 700 for transmitting the file being selected when the file linked with the original image and associated information 310 is displayed.

Here, the controller 180 can control the transmitted image (data) in a different manner according to whether or not the associated information 310 is displayed on the display unit 151. For example, when the button 700 is selected when the associated information 310 is not displayed on the display unit 151 as illustrated in FIG. 10C(a), the controller 180 can control to transmit only the original image 292. In another example, when the button 700 is selected when the associated information 310 is displayed on the display unit 151 as illustrated in FIG. 10C(b), the controller 180 can control to transmit a file 292b linked with the original image and associated information 310. Through such a configuration, when a user transmits an image to another person, information associated with a graphic object contained in the image may be transmitted at the same time, thereby transmitting the image in various ways.

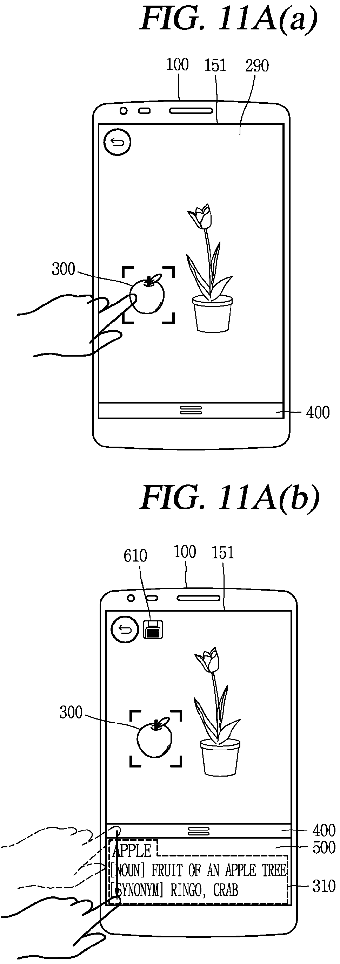

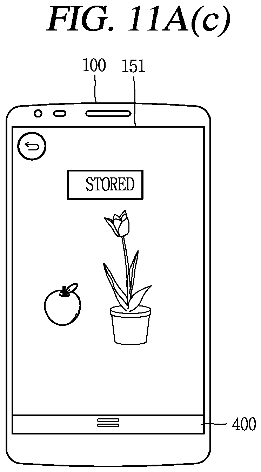

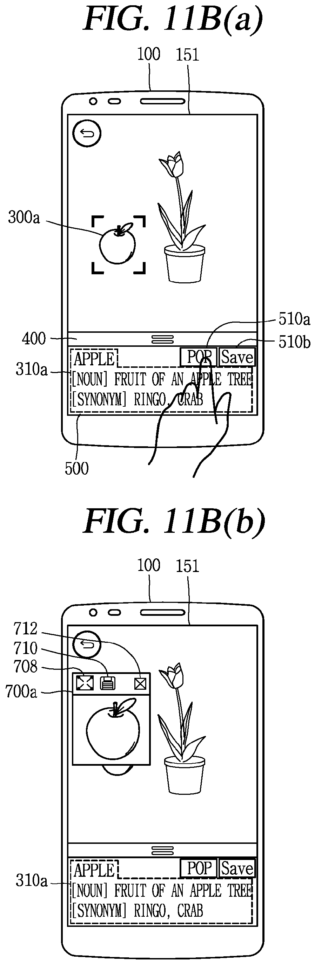

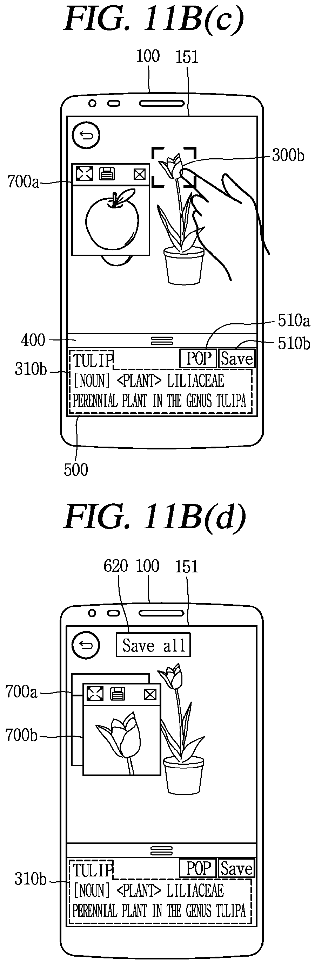

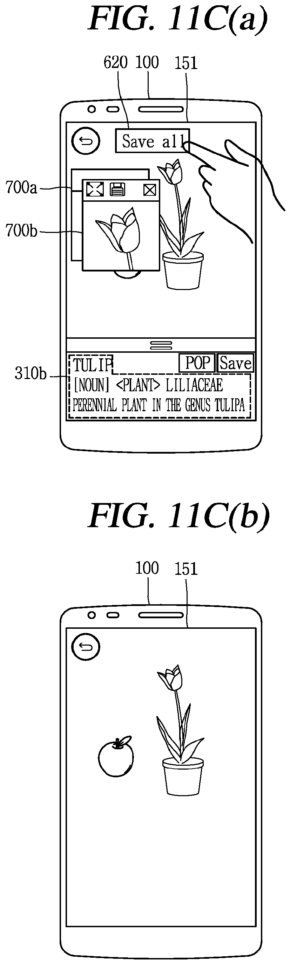

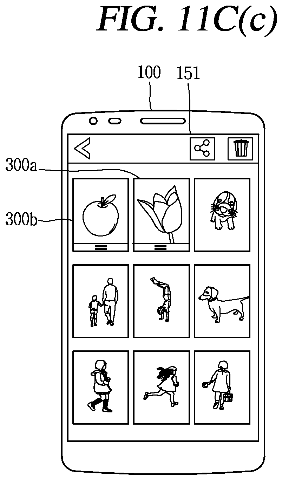

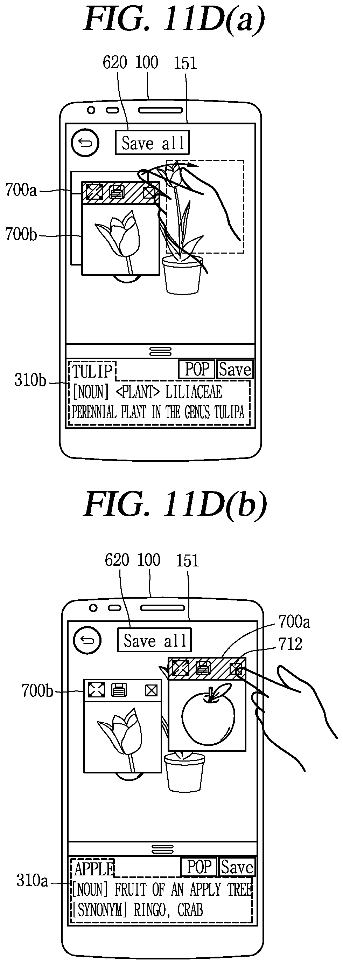

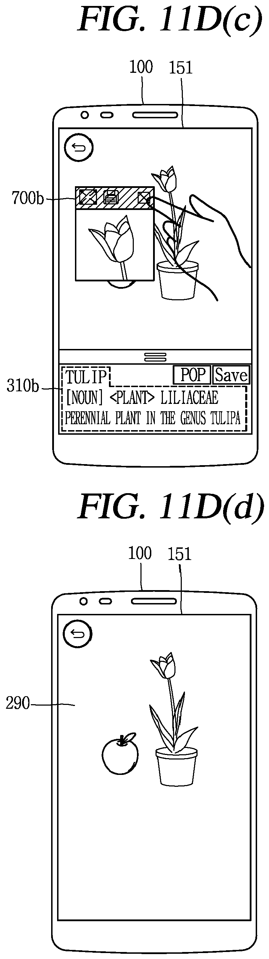

Hereinafter, a method of storing or using information associated with a graphic object to which a touch is applied or focus is automatically adjusted among graphic objects displayed on the preview image will be described in more detail with reference to the accompanying drawings. FIGS. 11A, 11B, 11C and 11D are conceptual views illustrating a method of using information associated with a graphic object to which a touch is applied or focus is adjusted in a preview image.

In general, as illustrated in FIG. 10A(a), the preview image 290 may be captured based on a touch being applied to the icon 600 linked with a display function. Further, when a touch is applied to one region of the screen on which the preview image 290 is displayed, a mobile terminal according to an embodiment of the present invention may adjust the focus around the region to which the touch is applied and capture the preview image. In other words, the controller 180 can perform a focus adjustment function and an image capture function only with one touch operation. In this instance, the display of graphic objects (icons) linked with the image capture function may be restricted on the preview image 290.

One embodiment of the present invention can adjust the focus around a graphic object to which the touch is applied when a touch is applied too at least one of graphic objects contained in the preview image 290, and perform an image capture operation for the preview image 290. Here, the display of the preview image 290 may be maintained. Furthermore, as illustrated in FIG. 11A(a), the indicator 400 indicating that there is information associated with a graphic object 300 to which the touch is applied may be displayed on the preview image 290.

The controller 180 can display information 310 associated with a graphic object to which the touch is applied in one region 500 of the display unit 151 based on a preset type of touch being applied to the indicator 400. Furthermore, the controller 180 can display an icon 610 for storing information 310 associated with a graphic object to which the touch is applied on at least one of the preview image 290 and the one region 500. When a touch is applied to the icon 610, the controller 180 can capture the preview image 290 being currently displayed on the display unit 151, and store the captured image and the associated information 310 in a linked manner.

In another example, when the associated information 310 is displayed in one region 500, the one region 500 may disappear based on a preset type of touch (for example, drag touch) being applied to the indicator 400 as illustrated in FIG. 11A(b). In this instance, as illustrated in FIG. 11A(c), the controller 180 can capture the preview image 290 being currently displayed on the display unit 151, and store the captured image and the associated information 310 in a linked manner.

The controller 180 can store the captured image and the associated information 310 in a linked manner, and then control the display unit 151 to display only the preview image 290. Further, the controller 180 can display a button 510a in one region 500 for displaying a pop-up window 700a displayed with associated information as shown in FIG. 11B(a). Specifically, when a touch is applied to the button 510a capable of displaying a pop-up window, the controller 180 can display a pop-up window 700a as shown in FIG. 11B(b).

The pop-up window 700a may perform the role of displaying screen information corresponding to any one of at least two functions to display the screen information corresponding to the at least two functions on one screen (one display unit). In other words, a mobile terminal according to an embodiment of the present invention may perform multitasking for executing at least two functions at the same time using the pop-up window 700a.

According to an embodiment, a capture image of the graphic object 300 to which a touch is applied (or focus is automatically adjusted) may be displayed on the pop-up window 700a when the preview image 290 is displayed as shown in FIG. 11B(c). Meanwhile, an execution screen of a web search function for searching associated information, an execution screen of a function for transmitting or sharing a file linked with the preview image and associated information, and the like as well as a capture image of the graphic object 300 to which a touch is applied may be displayed on the pop-up window 700a.

The pop-up window 700a may be moved or the size thereof may be changed according to a user request. Specifically, when a drag touch started from one region (for example, an upper end region) of the pop-up window 700a is applied, the controller 180 can move the pop-up window 700a. Furthermore, the controller 180 can change the size of the pop-up window 700a based on a drag touch started from an outline portion of the 700a being applied.

Further, as shown in FIG. 11B(b) the pop-up window 700a may include at least one of a store button 710 for storing screen information displayed on the pop-up window, a zoom-in button 708 for displaying only screen information displayed on the pop-up window on the display unit 151, and a close button 712 for closing the pop-up window.

In addition, hereinafter, a method of displaying the capture image of a graphic object to which a touch is applied (or focus is adjusted) to the pop-up window 700a will be described as an example. When a touch is applied or focus is applied to any one of graphic objects contained in the preview image, the controller 180 can extract the graphic object to which the touch is applied or focus is adjusted to generate a capture image.

Then, when a touch is applied to the button 510a for displaying a pop-up window displayed in the one region 500, the controller 180 can display the pop-up window 700a, and display the generated capture image on the pop-up window 700a. For example, as illustrated in FIG. 11B(a), the controller 180 can sense a touch being applied to the button 510a for displaying a pop-up window when information 310a associated with a graphic object 300a to which a touch is applied (or focus is adjusted) is displayed in the one region 500. The controller 180 can display a pop-up window 700a including a capture image of the graphic object 300a to which a touch is applied on the display unit 151 based on a touch being applied to the button 510a.

When a touch is applied to a different graphic object 300b among graphic objects contained in the preview image when the pop-up window 700a is displayed, the controller 180 can display information 310b associated with the different graphic object 300b in one region 500 of the display unit as shown in FIG. 11B(c). Then, when a touch is applied to the button 510a for displaying a pop-up window displayed in one region, the controller 180 can display a pop-up window 700b including a capture image of the different graphic object 300b as illustrated in FIG. 11B(d).

Here, the display of the preview image 290 is continuously maintained even when at least one pop-up window 700a or 700b is displayed. Further, the controller 180 can link information associated with a graphic object with a pop-up window. Specifically, when a pop-up window including a capture image of the graphic object is displayed, the controller 180 can link information associated with the graphic object to the pop-up window. In other words, when a touch is applied to a button capable of displaying a pop-up window when information associated with a graphic object to which a touch is applied (or focus is adjusted), the capture image of the graphic object and the information associated with the graphic object may be linked with the displayed pop-up window.

Then, when a touch is applied to a store button (or an icon linked with a store function) contained in the pop-up window 700a or 700b, the controller 180 can store a capture image displayed on the pop-up window and the associated information in a linked manner in the memory unit. Further, as illustrated in FIG. 11B(d), when at least two pop-up windows are displayed, the controller 180 can display a button (or icon) 620 for storing a capture image contained in the at least two pop-up windows and associated information linked with the at least two pop-up windows in the memory unit.

When a touch is applied to the button 620 as illustrated in FIG. 11C(a), the controller 180 can store a capture image contained in at least two pop-up windows 700a, 700b overlapping with the preview image 290 and associated information 310a, 310b linked with the pop-up windows in the memory 170. Furthermore, the controller 180 can control the display unit 151 to allow at least one of the pop-up window 700a, 700b, button 620, indicator 400 and one region 500 to disappear based on the execution of the store operation. Then, only the preview image 290 may be displayed on the display unit 151 as illustrated in FIG. 11C(b).

A screen in which the at least two capture images and associated information are stored in a linked manner is illustrated in FIG. 11C(c). As described above, when a touch is applied to a button 620 for storing capture images contained in the at least two pop-up windows and associated information linked with the at least two pop-up windows in the memory unit, the controller 180 can store the capture image of the graphic object 300a, 300b to which the touch is applied (or focus is adjusted) and information associated with the graphic object in a linked manner.

Further, the controller 180 can change associated information displayed in one region 500 of the display unit 151 using the pop-up window. A first pop-up window 700a including a capture image of the first graphic object and a second pop-up window 700b including a capture image of the second graphic object are displayed in FIG. 11D. Furthermore, information 310b associated with the second graphic object is displayed in one region of the display unit 151.

The controller 180 can display information linked with an active pop-up window among at least two pop-up windows in one region 500 of the display unit 151. Here, the active pop-up window may be a most recently displayed pop-up window, a pop-up window to which a touch is most recently applied when a plurality of pop-up windows are displayed, or the like.

For example, it is illustrated in FIG. 11D that the second pop-up window is most recently generated according to the method of FIG. 11B to activate the second pop-up window 700b. In this instance, as illustrated in FIG. 11D(a), the controller 180 can allow the activated second pop-up window 700b to overlap with the deactivated first pop-up window 700a. Furthermore, associated information 310b linked with the activated second pop-up window 700b may be displayed in one region 500 of the display unit 151.

Here, as illustrated in FIG. 11D(a), when a touch is applied to the deactivated first pop-up window 700a or the first pop-up window 700a is moved as a drag touch is applied thereto, the controller 180 can activate the first pop-up window 700a. Furthermore, as illustrated in FIG. 11D(b), information 310a linked with the first pop-up window 700a instead of information 310b linked with the second pop-up window 700b may be displayed as the first pop-up window 700a is activated.

Further, when the pop-up window 700a linked with associated information 310a displayed in one region 500 of the display unit 151 disappears as illustrated in FIG. 11D(b), the controller 180 can reactivate the previously activated pop-up window 700b as illustrated in FIG. 11D(c). Furthermore, as the previously activated pop-up window 700b is activated again, information 310b linked with the previously activated pop-up window 700b instead of information 310a linked with the pop-up window 700a that has disappeared in one region 500 of the display unit 151. Further, when the pop-up window 700b disappears when only any one pop-up window 700b is displayed on the display unit 151, only the preview image 290 may be displayed on the display unit 151 as illustrated in FIG. 11D(d).

As described above, the present invention can change information displayed on the display unit 151 using a pop-up window including a capture image of a graphic object to which a touch is applied (or focus is adjusted). Furthermore, the present invention can store a capture image contained in a pop-up window and associated information in a linked manner using the pop-up window. A user may use a pop-up window including a capture image to more intuitively find a graphic object that has been selected by himself or herself (or to which focus is automatically adjusted), and easily store the associated information and capture image in a linked manner, enhancing convenience.

As described above, according to an embodiment of the present invention, the present invention provides information associated with a graphic object touched by the user on a preview image while performing an image capture function. Accordingly, the present invention may satisfy the user's need to receive the associated information while at the same time performing an image capture function, without additionally performing a different function (for example, a web search function executed by entering an app icon) to obtain information associated with the graphic object.

Furthermore, when information associated with a graphic object touched by the user includes a plurality of categories, the present invention provides associated information corresponding to any one category based on a user request. Accordingly, the user can receive associated information corresponding to his or her desired category for a specific graphic object, thereby enhancing convenience.

Furthermore, the present invention performs an application function while at the same time performing an image capture function using information associated with a graphic object touched by the user. Furthermore, the present invention can perform the functions at the same time on one screen without separately performing an image capture function and an application function. Accordingly, the present invention can perform the application function using information associated with a graphic object touched on the preview image according to an image capture function, and provide a new user interface for performing the image capture function and application function on one screen.

Furthermore, when a subject corresponding to a graphic object touched by the user is a device capable of communication, the present invention can perform communication with the device using information associated with the device. Accordingly, the user can intuitively select an external device visually seen through the preview image provided with an image capture function, and perform communication with the selected electronic device, thereby enhancing convenience.

The foregoing present invention may be implemented as codes readable by a computer on a medium written by the program. The computer-readable media may include all kinds of recording devices in which data readable by a computer system is stored. Examples of the computer-readable media may include hard disk drive (HDD), solid state disk (SSD), ROM, RAM, CD-ROM, magnetic tape, floppy disk, and optical data storage device, and the like, and also include a device implemented in the form of a carrier wave (for example, transmission via the Internet). In addition, the computer may include the controller 180 of the terminal. Accordingly, the detailed description thereof should not be construed as restrictive in all aspects but considered as illustrative. The scope of the invention should be determined by reasonable interpretation of the appended claims and all changes that come within the equivalent scope of the invention are included in the scope of the invention.

## Claims

1. A mobile terminal, comprising:
a camera (121a; 121b);
a touchscreen (151) configured to display a preview image (290) received through the camera; and
a controller (180) configured to:
display the preview image (290) on a first region of the touch screen (151),
display an outline around a graphic object (300, 300a) on the preview image (290) and a plurality of icons related to the graphic object (300, 300a) on a second region of the touchscreen in response to determination that the graphic object (300, 300a) is included in the preview image,
when one of the plurality of icons is touched, display category information (410) associated with the touched one of the plurality of icons and information (310) corresponding to the category and related to the graphic object (300, 300a) on the second region of the touch screen (151),
wherein the category information (410) and the information (310) corresponding to the category and related to the graphic object (300, 300a) are displayed together with the preview image (290), and when the one of the plurality of icons is touched, the first region in which a captured preview image is displayed is reduced and the second region is enlarged.

2. The mobile terminal of claim 1, wherein the graphic object (300) is at least one of a body, a building, a text, a photo, a picture, a face, a map, an external device, an automobile, a robot, a barcode, a QR code.

3. The mobile terminal of claim 1 or 2, wherein when a touch is applied to the first region in which the preview image (290) is displayed when the information (310) is displayed, the controller (180) captures the preview image (290), and stores the captured preview image (290) and the displayed information (310) in a linked manner in a memory (170).

4. The mobile terminal of any one of the preceding claims, wherein when the determined graphic object (300) moves, the outline moves at the same time, depending on the movement of the graphic object (300).

5. The mobile terminal of any one of the preceding claims, wherein when a plurality of category information is linked with a graphic object (300) among graphic objects contained in the preview image (290), the plurality of category information (410a, 410b) is displayed at the same time.

6. The mobile terminal of claim 5, wherein when a preset type of touch is applied to any one of the plurality of category information (410a, 410b) displayed, the controller (180) displays information (310) corresponding to any category information (410a, 410b) to which the touch is applied on the touchscreen (151).
